# EUROPEAN PATENT APPLICATION

(11) **EP 4 657 905 A1**
(43) Date of publication of application: **03.12.2025**
(21) Application number: 24777690.9
(22) Date of filing: 11.03.2024
(51) Int. Cl.: H04W 8/20

(54) **DATA PROCESSING METHOD AND APPARATUS AND COMPUTER READABLE STORAGE MEDIUM**

(30) Priority: 24.03.2023 CN 202310335248; 22.09.2023 CN 202311238539
(71) Applicant: Huawei Technologies Co., Ltd., Shenzhen, Guangdong 518129 (CN)
(72) Inventor: ZHANG, Zhiqin, Shenzhen, Guangdong 518129 (CN); FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: Maiwald GmbH
(86) International application number: PCT/CN2024/080921
(87) International publication number: WO 2024/198900

(57) **Abstract**

This application provides a data processing method and apparatus, and a computer-readable storage medium, to reduce storage space occupied by a redundant PFD stored in a UDR. After obtaining a first PFD, a first device obtains a second PFD from a second device, and sends a PFD set to a UDR based on the first PFD and the second PFD, so that the UDR can update PFD information in the second PFD based on the PFD set. The PFD set includes at least one of the first PFD and the second PFD, the first PFD includes a first triplet and a first application ID, and the second PFD includes a second triplet and a second application ID. Implementing a method for sending the PFD set can reduce storage space occupied by a redundant PFD stored in the UDR, ensure that an SMF can determine a unique PFD based on an ID of a to-be-processed application or triplet information of a to-be-processed application, reduce an operation of selecting a PFD by the SMF from a plurality of PFDs that correspond to the to-be-processed application and that are stored in the UDR, and further reduce operation complexity of the SMF.

## Description

This application claims priorities to Chinese Patent Application No. 202310335248.2, filed with the China National Intellectual Property Administration on March 24, 2023 and entitled "DATA PROCESSING METHOD AND APPARATUS, AND COMPUTER-READABLE STORAGE MEDIUM", and to Chinese Patent Application No. 202311238539.6, filed with the China National Intellectual Property Administration on September 22, 2023 and entitled "DATA PROCESSING METHOD AND APPARATUS, AND COMPUTER-READABLE STORAGE MEDIUM", both of which are incorporated herein by reference in their entireties.

### TECHNICAL FIELD

Embodiments of this application relate to the wireless network field, and in particular, to a data processing method and apparatus, and a computer-readable storage medium.

### BACKGROUND

With rapid development of wireless network technologies, to efficiently manage and monitor networks, in an application identification technology, traffic is classified based on an application feature, a protocol feature, or the like in the traffic, to implement refined traffic management and control.

During actual application, in the application identification technology, a network data analytics function (network data analytics function, NWDAF) network element may further collect information about a traffic flow passing through a core network, perform application feature extraction on the information about the traffic flow, determine an application corresponding to the information about the traffic flow, and generate application-level packet flow description (packet flow description, PFD) information based on a triplet in the information about the traffic flow. The NWDAF provides the PFD information for a NEF (PFDF). A session management function (session management function, SMF) installs a PFD obtained from the NEF (PFDF) on a user plane function (user plane function, UPF). The UPF identifies a purpose of the traffic flow based on the PFD of the traffic flow, to charge the traffic flow, and allocate a network resource to the traffic flow.

In a scenario in which the NWDAF and an application function (application function, AF) both provide a PFD of an application, if the NWDAF and the AF both provide PFD information of a same application A for the network exposure function (network exposure function, NEF), when the NEF dumps the PFD information of the application A to a unified data repository (unified data repository, UDR), the NEF stores a plurality of pieces of repeated PFD information of the application A because there are a plurality of pieces of optional PFD information and the NEF directly dumps the PFD information of the application A to the UDR. This leads to occupation of storage space in the UDR, increases complexity in selecting the PFD information by the SMF, and reduces accuracy of management performed by the SMF on a traffic flow of the application A based on the PFD information stored in the UDR.

### SUMMARY

This application provides a data processing method and apparatus, and a computer-readable storage medium, to avoid a case in which redundant PFD information is dumped by a NEF to a UDR, and reduce storage space occupied by a redundant PFD stored in the UDR.

A first aspect of this application provides a data processing method, including: A first device obtains a first packet flow description PFD, where the first PFD includes a first triplet and a first application identity (identity document, ID); the first device obtains a second PFD sent by a second device, where the second PFD includes a second triplet and a second application ID; and the first device sends a PFD set to a UDR based on the first PFD and the second PFD, where the PFD set includes at least one of the first PFD or the second PFD.

In this embodiment of this application, after obtaining the first PFD, the first device obtains the second PFD from the second device, and sends the PFD set to the UDR based on the first PFD and the second PFD, so that the UDR can update PFD information in the second PFD based on the PFD set. The PFD set includes at least one of the first PFD and the second PFD, the first PFD includes the first triplet and the first application ID, and the second PFD includes the second triplet and the second application ID. A NEF does not dump a redundant PFD to the UDR by implementing a method for sending the PFD set. This reduces storage space occupied by the redundant PFD stored in the UDR, ensures that an SMF can determine a unique PFD based on an ID of a to-be-processed application or triplet information of a to-be-processed application, reduces an operation of selecting a PFD by the SMF from a plurality of PFDs that correspond to the to-be-processed application and that are stored in the UDR, and further reduces operation complexcity of the SMF.

In a possible implementation of the first aspect, the first PFD further includes a first character string, the second PFD further includes a second character string, the first character string is used to describe a source of the first PFD, and the second character string is used to describe a source of the second PFD. In this embodiment of this application, the first PFD carries the first character string for describing the source of the first PFD, and the second PFD carries the second character string for describing the source of the second PFD, so that a device using the first PFD or the second PFD easily determines reliability of the first PFD or the second PFD based on the source of the first PFD or the second PFD. This improves flexibility of the solutions.

In a possible implementation of the first aspect, that the first device sends the PFD set to the UDR based on the first PFD and the second PFD, where the PFD set includes at least one of the first PFD or the second PFD includes: When the first device determines that the first triplet is different from the second triplet and the first application ID is different from the second application ID, the first device sends the PFD set to the UDR, where the PFD set includes the first PFD and the second PFD; or when the first device determines that the first triplet is different from the second triplet and the first application ID is the same as the second application ID, or the first triplet is the same as the second triplet and the first application ID is different from the second application ID, the first device determines that the first character string is different from the second character string, and the first device determines that the first character string indicates that the source of the first PFD is an AF, and sends the PFD set to the UDR, where the PFD set includes the first PFD; or the first device determines that the first character string indicates that the source of the first PFD is an NWDAF, and sends the PFD set to the UDR, where the PFD set includes the second PFD.

In this embodiment of this application, when the first device determines that the first triplet is different from the second triplet and the first application ID is different from the second application, the PFD set sent by the first device to the UDR includes the first PFD and the second PFD. Alternatively, when the first device determines that the first triplet is different from the second triplet and the first application ID is the same as the second application ID, or the first triplet is the same as the second triplet and the first application ID is different from the second application ID, the first device determines that the first character string is different from the second character string, and the first device determines that the first character string indicates that the source of the first PFD is the AF, and the PFD set sent by the first device to the UDR includes the first PFD; or the first device determines that the first character string indicates that the source of the first PFD is the NWDAF, and the PFD set sent to the UDR includes the second PFD. The first PFD and the second PFD that have different triplets and application IDs are sent to the UDR. Alternatively, when the first PFD and the second PFD have different triplets or different application IDs, the first device further determines that the first character string is different from the second character string, and sends the first PFD to the UDR when the first character string indicates that the source of the first PFD is the AF; or sends the second PFD to the UDR when the first character string indicates that the source of the first PFD is the NWDAF. This avoids sending a redundant PFD to the UDR. In addition, because reliability of a PFD obtained by the NWDAF through analysis is limited by a volume and a type of data collected by the NWDAF, when both the first PFD and the second PFD are related to a same application, a PFD whose source is the AF is preferentially sent to the UDR. This improves reliability of a PFD sent by the first device to the UDR.

In a possible implementation of the first aspect, the first PFD further includes first time information, and the second PFD further includes second time information. That the first device sends the PFD set to the UDR based on the first PFD and the second PFD, where the PFD set includes at least one of the first PFD or the second PFD includes: When the first device determines that the first triplet is different from the second triplet and the first application ID is the same as the second application ID, or the first triplet is the same as the second triplet and the first application ID is different from the second application ID, the first device determines that the first character string is the same as the second character string, and the first device determines, based on the first time information and the second time information, that the first PFD is generated before the second PFD, and sends the PFD set to the UDR, where the PFD set includes the second PFD; or the first device determines, based on the first time information and the second time information, that the first PFD is generated after the second PFD, and sends the PFD set to the UDR, where the PFD set includes the first PFD; or when the first device determines that the first triplet is the same as the second triplet and the first application ID is the same as the second application ID, the first device determines, based on the first time information and the second time information, that the first PFD expires before the second PFD, and sends the PFD set to the UDR, where the PFD set includes the second PFD; or the first device determines, based on the first time information and the second time information, that the first PFD expires after the second PFD, and sends the PFD set to the UDR, where the PFD set includes the first PFD.

In this embodiment of this application, the first device sends the PFD set to the UDR based on the first PFD and the second PFD. Specifically, the first device may determine that the first triplet is different from the second triplet and the first application ID is the same as the second application ID, or the first triplet is the same as the second triplet and the first application ID is different from the second application ID, so that the first device determines that the first character string is the same as the second character string, and the first device determines, based on the first time information and the second time information, that the first PFD is generated before the second PFD, where the PFD set sent to the UDR includes the second PFD; or the first device determines, based on the first time information and the second time information, that the first PFD is generated after the second PFD, where the PFD set sent to the UDR includes the first PFD. Alternatively, when the first device determines that the first triplet is the same as the second triplet and the first application ID is the same as the second application ID, the first device determines, based on the first time information and the second time information, that the first PFD expires before the second PFD, where the PFD set sent by the first device to the UDR includes the second PFD; or the first device determines, based on the first time information and the second time information, that the first PFD expires after the second PFD, where the PFD set sent by the first device to the UDR includes the second PFD. The first device does not send a redundant PFD to the UDR. In addition, when the first PFD and the second PFD have same triplets and same application IDs, the first device preferentially sends a PFD with a later expiration moment, to ensure maximum validity duration of a PFD sent to the UDR. When the first PFD and the second PFD have different triplets or different application IDs, and the first PFD and the second PFD have same sources, the first device preferentially sends a PFD with a later generation moment, to ensure that a PFD sent to the UDR is a most timely PFD available. In this way, reliability of the solutions is improved.

In a possible implementation of the first aspect, the first time information includes an expiration moment of the first PFD and a generation moment of the first PFD, or validity duration of the first PFD and a generation moment of the first PFD, and the second time information includes an expiration moment of the second PFD and a generation moment of the second PFD, or validity duration of the second PFD and a generation moment of the second PFD. In this embodiment of this application, the first time information may include the expiration moment of the first PFD and the generation moment of the first PFD, or the validity duration of the first PFD and the generation moment of the first PFD. The second time information may include the expiration moment of the second PFD and the generation moment of the second PFD, or the validity duration of the second PFD and the generation moment of the second PFD. A generation moment and an expiration moment of a PFD are marked in different representation forms of time information, to provide a basis for the first device to process a redundant PFD. This improves flexibility of the solutions.

In a possible implementation of the first aspect, a generation moment of the first PFD is after a generation moment of the second PFD.

That the first device sends the PFD set to the UDR based on the first PFD and the second PFD, where the PFD set includes at least one of the first PFD or the second PFD includes:
the first device sends the PFD set to the UDR when the first application ID is the same as the second application ID, at least one of the following cases occurs: the first triplet is different from the second triplet, a first uniform resource locator (uniform resource locator, URL) is different from a second URL, and a first domain name (domain name, DN) is different from a second DN, the first character string indicates that the source of the first PFD is an NWDAF, and the second character string indicates that the source of the second PFD is an AF, where the PFD set includes the first PFD and the second PFD; or
the first device sends the PFD set to the UDR when the first application ID is the same as the second application ID, at least one of the following cases occurs: the first triplet is different from the second triplet, a first URL is different from a second URL, and a first DN is different from a second DN, the first character string indicates that the source of the first PFD is an NWDAF, and the second character string indicates that the source of the second PFD is an NWDAF, where the PFD set includes the first PFD.

In this embodiment of this application, the first device sends the PFD set to the UDR based on the first PFD and the second PFD. Specifically, the PFD set sent by the first device to the UDR includes the first PFD and the second PFD when the first application ID is the same as the second application ID, at least one of the following cases occurs: the first triplet is different from the second triplet, the first URL is different from the second URL, and the first DN is different from the second DN, the first character string indicates that the source of the first PFD is the NWDAF, and the second character string indicates that the source of the second PFD is the AF. The PFD set sent by the first device to the UDR includes the first PFD when the first application ID is the same as the second application ID, at least one of the following cases occurs: the first triplet is different from the second triplet, the first URL is different from the second URL, and the first DN is different from the second DN, the first character string indicates that the source of the first PFD is the NWDAF, and the second character string indicates that the source of the second PFD is the NWDAF. It is ensured that when there are a plurality of associated PFDs, a highest-reliability PFD is stored in the UDR for later selection. This improves reliability of the solutions, and also simplifies operation in subsequently selecting a PFD by another network element.

In a possible implementation of the first aspect, a generation moment of the first PFD is after a generation moment of the second PFD.

That the first device sends the PFD set to the UDR based on the first PFD and the second PFD, where the PFD set includes at least one of the first PFD or the second PFD includes:
the first device sends the PFD set to the UDR when the first application ID is different from the second application ID, the first triplet is the same as the second triplet, the first character string indicates that the source of the first PFD is an NWDAF, and the second character string indicates that the source of the second PFD is an NWDAF, where the PFD set includes the first PFD; or
the first device sends the PFD set to the UDR when the first application ID is different from the second application ID, the first triplet is the same as the second triplet, the first character string indicates that the source of the first PFD is an NWDAF, and the second character string indicates that the source of the second PFD is an AF, where the PFD set includes the second PFD.

In this embodiment of this application, the first device sends the PFD set to the UDR based on the first PFD and the second PFD. Specifically, the PFD set sent to the UDR includes the first PFD when the first application ID is different from the second application ID, the first triplet is the same as the second triplet, the first character string indicates that the source of the first PFD is the NWDAF, and the second character string indicates that the source of the second PFD is the NWDAF. The UDR set sent to the UDR includes the second PFD hen the first application ID is different from the second application ID, the first triplet is the same as the second triplet, the first character string indicates that the source of the first PFD is the NWDAF, and the second character string indicates that the source of the second PFD is the AF. It is ensured that when there are a plurality of associated PFDs, a highest-reliability PFD is stored in the UDR for later selection. This improves reliability of the solutions, and also simplifies operation in subsequently selecting a PFD by another network element.

In a possible implementation of the first aspect, the second PFD further includes a third character string, and the third character string indicates that the PFD is a PFD generated by a preset device.

In this embodiment of this application, a mark is added to a PFD whose source is the preset device, to help distinguish between different sources of PFDs. This effectively reduces PFD content reduction when there are only two cases of the sources of the PFDs, and helps reduce network resource consumption in a PFD transmission process.

In a possible implementation of the first aspect, the first device includes a NEF and the second device includes a unified data repository UDR; or the first device includes an application function AF and the second device includes an NWDAF. In this embodiment of this application, when the first device is the NEF, the second device is the UDR; or when the first device is the AF, the second device is the NWDAF. The method may be performed in the NEF, to efficiently manage PFDs of all applications in a network; or may be performed in the AF, to effectively reduce data processing pressure of the NEF.

In a possible implementation of the first aspect, when the first device includes an NWDAF, the second device includes a UDR or a NEF, and the first PFD is a PFD generated by the NWDAF; or when the first device includes a NEF, the second device includes a UDR.

In this embodiment of this application, when the first device is the NWDAF, the second device includes the NEF or the UDR; or when the first device includes the NEF, the second device includes the UDR. The method may be performed in both the NWDAF and the NEF. A flexible execution environment provides more possibilities for implementing the solutions, improves flexibility of implementing the solutions, and reduces data processing pressure of each node.

A second aspect of this application provides a data processing method, the method includes the following steps:

A unified data repository UDR obtains a PFD information query request from a first device;
the UDR sends a second PFD to the first device, where the second PFD includes a second triplet and a second application ID; and
the UDR obtains a PFD set from the first device, where the PFD set includes at least one of a first PFD and the second PFD, and the first PFD includes a first triplet and a first application ID.

In a possible implementation of the second aspect, the second PFD further includes a second character string, the first PFD further includes a first character string, the first character string is used to describe a source of the first PFD, and the second character string is used to describe a source of the second PFD.

In a possible implementation of the second aspect, the first PFD further includes first time information, and the second PFD further includes second time information.

In a possible implementation of the second aspect, the second PFD further includes a third character string, and the third character string indicates that the PFD is a PFD generated by a preset device.

A third aspect of this application provides a data processing apparatus, including:
an obtaining unit, configured to obtain a first packet flow description PFD, where the first PFD includes a first triplet and a first application ID; and
the obtaining unit is further configured to obtain a second PFD sent by a second device, where the second PFD includes a second triplet and a second application ID; and
a sending unit, configured to send a PFD set to a UDR based on the first PFD and the second PFD, where the PFD set includes at least one of the first PFD or the second PFD.

In a possible implementation of the third aspect, the first PFD further includes a first character string, the second PFD further includes a second character string, the first character string is used to describe a source of the first PFD, and the second character string is used to describe a source of the second PFD.

In a possible implementation of the third aspect, the sending unit is specifically configured to:
when determining that the first triplet is different from the second triplet and the first application ID is different from the second application ID, send, by the first device, the PFD set to the UDR, where the PFD set includes the first PFD and the second PFD; or
when determining that the first triplet is different from the second triplet and the first application ID is the same as the second application ID, or the first triplet is the same as the second triplet and the first application ID is different from the second application ID, determine, by the first device, that the first character string is different from the second character string, and determine, by the first device, that the first character string indicates that the source of the first PFD is an AF, and send the PFD set to the UDR, where the PFD set includes the first PFD; or determine, by the first device, that the first character string indicates that the source of the first PFD is an NWDAF, and send the PFD set to the UDR, where the PFD set includes the second PFD.

In a possible implementation of the third aspect, the first PFD further includes first time information, and the second PFD further includes second time information.

The sending unit is specifically configured to:
when determining that the first triplet is different from the second triplet and the first application ID is the same as the second application ID, or the first triplet is the same as the second triplet and the first application ID is different from the second application ID, determine, by the first device, that the first character string is the same as the second character string, and determine, by the first device based on the first time information and the second time information, that the first PFD is generated before the second PFD, and send the PFD set to the UDR, where the PFD set includes the second PFD; or determine, by the first device based on the first time information and the second time information, that the first PFD is generated after the second PFD, and send the PFD set to the UDR, where the PFD set includes the first PFD; or
when determining that the first triplet is the same as the second triplet and the first application ID is the same as the second application ID, determine, by the first device based on the first time information and the second time information, that the first PFD expires before the second PFD, and send the PFD set to the UDR, where the PFD set includes the second PFD; or determine, by the first device based on the first time information and the second time information, that the first PFD expires after the second PFD, and send the PFD set to the UDR, where the PFD set includes the first PFD.

In a possible implementation of the third aspect, the first time information includes an expiration moment of the first PFD and a generation moment of the first PFD, or validity duration of the first PFD and a generation moment of the first PFD, and the second time information includes an expiration moment of the second PFD and a generation moment of the second PFD, or validity duration of the second PFD and a generation moment of the second PFD.

In a possible implementation of the third aspect, a generation moment of the first PFD is after a generation moment of the second PFD.

The sending unit is specifically configured to:
send, by the first device, the PFD set to the UDR when the first application ID is the same as the second application ID, at least one of the following cases occurs: the first triplet is different from the second triplet, a first URL is different from a second URL, and a first DN is different from a second DN, the first character string indicates that the source of the first PFD is an NWDAF, and the second character string indicates that the source of the second PFD is generated by an AF, where the PFD set includes the first PFD and the second PFD; or
send, by the first device, the PFD set to the UDR when the first application ID is the same as the second application ID, at least one of the following cases occurs: the first triplet is different from the second triplet, a first URL is different from a second URL, and a first DN is different from a second DN, the first character string indicates that the source of the first PFD is an NWDAF, and the second character string indicates that the source of the second PFD is an NWDAF, where the PFD set includes the first PFD.

In a possible implementation of the third aspect, a generation moment of the first PFD is after a generation moment of the second PFD.

The sending unit is specifically configured to:
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an NWDAF, where the PFD set includes the first PFD; or
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an AF, where the PFD set includes the second PFD.

In a possible implementation of the third aspect, the second PFD further includes a third character string, and the third character string indicates that the PFD is a PFD generated by a preset device.

In a possible implementation of the third aspect, the first device includes a network exposure function NEF and the second device includes a unified data repository UDR, or the first device includes an application function AF and the second device includes an NWDAF.

In a possible implementation of the third aspect, when the first device includes an NWDAF, the second device includes a UDR or a NEF, and the first PFD is a PFD generated by the NWDAF; or when the first device includes a NEF, the second device includes a UDR.

A fourth aspect of this application provides a data processing apparatus, including:
an obtaining unit, configured to obtain a PFD information query request sent by a first device; and
a sending unit, configured to send a second PFD to the first device, where the second PFD includes a second triplet and a second application ID; and
the obtaining unit is further configured to obtain a PFD set sent by the first device, where the PFD set includes at least one of a first PFD and the second PFD, and the first PFD includes a first triplet and a first application ID.

In a possible implementation of the fourth aspect, the second PFD further includes a second character string, the first PFD further includes a first character string, the first character string is used to describe a source of the first PFD, and the second character string is used to describe a source of the second PFD.

In a possible implementation of the fourth aspect, the first PFD further includes first time information, and the second PFD further includes second time information.

In a possible implementation of the fourth aspect, the second PFD further includes a third character string, and the third character string indicates that the PFD is a PFD generated by a preset device.

A fifth aspect of this application provides a data processing apparatus, including a processor and a memory. The memory is configured to store instructions. The processor is configured to execute the instructions. When the processor executes the instructions, the method according to any one of the first aspect or the possible implementations of the first aspect is performed.

A sixth aspect of this application provides a data processing apparatus, including a processor and a memory. The memory is configured to store instructions. The processor is configured to execute the instructions. When the processor executes the instructions, the method according to any one of the second aspect or the possible implementations of the second aspect is performed.

A seventh aspect of this application provides a computer-readable storage medium, including a program. When the program is run on a computer, the computer is enabled to perform the method according to any one of the first aspect or the possible implementations of the first aspect.

An eighth aspect of this application provides a computer-readable storage medium, including a program. When the program is run on a computer, the computer is enabled to perform the method according to any one of the second aspect or the possible implementations of the second aspect.

A ninth aspect of this application provides a computer program product including instructions. When the computer program product is run on a computer, the computer is enabled to perform the method according to any one of the first aspect or the possible implementations of the first aspect.

A tenth aspect of this application provides a computer program product including instructions. When the computer program product is run on a computer, the computer is enabled to perform the method according to any one of the second aspect or the possible implementations of the second aspect.

### BRIEF DESCRIPTION OF DRAWINGS

FIG. 1 is a diagram of an architecture of a 5G network according to an embodiment of this application;
FIG. 2 is a schematic flowchart of a data processing method according to an embodiment of this application;
FIG. 3 is another schematic flowchart of a data processing method according to an embodiment of this application;
FIG. 4 is another schematic flowchart of a data processing method according to an embodiment of this application;
FIG. 5 is a diagram of PFDs according to an embodiment of this application;
FIG. 6 is another diagram of PFDs according to an embodiment of this application;
FIG. 7 is a schematic flowchart of a data processing method according to an embodiment of this application;
FIG. 8 is a diagram of a data processing apparatus according to an embodiment of this application;
FIG. 9 is another diagram of a data processing apparatus according to an embodiment of this application;
FIG. 10 is a diagram of another structure of a data processing apparatus according to an embodiment of this application; and
FIG. 11 is a diagram of another structure of a data processing apparatus according to an embodiment of this application.

### DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects with a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

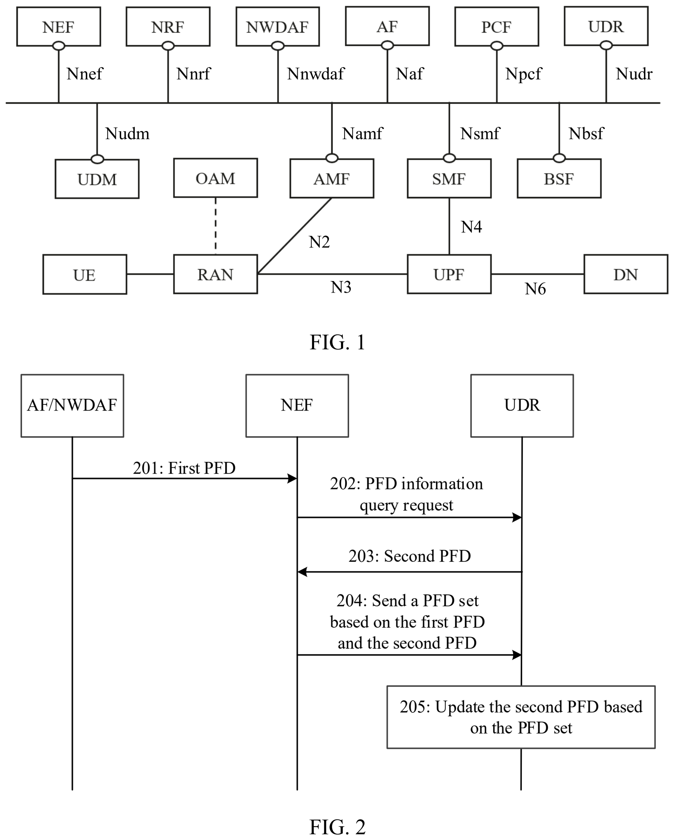

For better understanding of the solutions provided in this application, an architecture of a 5G network is first described. Refer to FIG. 1. FIG. 1 is a diagram of the architecture of the 5G network according to an embodiment of this application.

The 5G network includes a NEF, a network repository function (network repository function, NRF), an NWDAF, an AF, a policy control function (policy control function, PCF), a UDR, a unified data management (unified data management, UDM), an access and mobility management function (access and mobility management function, AMF), an SMF, a binding support function (binding support function, BSF), a radio access network (radio access network, RAN), a UPF, a data network (data network, DN), and a user equipment (user equipment, UE).

A connection relationship between network elements in the 5G network is shown in FIG. 1. The NEF is configured to: provide a secure path for opening a service and a capability of a network function ID to the AF, and obtain information provided by the AF. The NEF includes a NEF (PFDF). As a logic function of the NEF, the NEF (PFDF) receives a PFD provided by the AF and a PFD provided by the NWDAF, and stores received PFDs in the UDR.

The NWDAF is configured to: collect data from a network element, a third-party AF, the RAN, or a network management system, perform model training and inference based on the data from the network element, the third-party AF, the RAN, or the network management system, and provide a data analysis result for a consumer (the network element or the third-party AF). Based on the data analysis result, the consumer can select a service quality parameter of a service, formulate a traffic routing path, or select a background data transmission policy.

The AF is configured to: transfer a requirement of an application side on a network side and provide application side data for a network, for example, a QoS request or a user status event subscription.

The UDR is configured to store subscription data, policy data, capability exposure related data, and application data.

To improve network management efficiency, in an application identification technology, packets are classified based on an application feature, a protocol feature, or the like in the packets, to obtain a PFD of an application that sends the packets; and the UPF manages, based on a description about the application in the PFD, a traffic request initiated by the application, for example, controls, based on application access management, access of a user to an application through a network, for example, allows access to an office-related application and disables access to a video or game application; controls, based on application bandwidth management, an available bandwidth for a user to access an application through a network, for example, limits a maximum available bandwidth of a video or game application to 100 M and ensures that a maximum available bandwidth of an office application is 200 M; or controls, based on an intelligent link selection function of an application, access of a user to different applications through different links, for example, access to an office application is implemented through a high-speed link, and access to a video or game application is implemented through a low-speed link.

In a process in which the UPF manages a network, the SMF needs to obtain, from the UDR, PFD information corresponding to a packet triplet. For example, a PFD of an application A stored in the UDR may be a PFD 1 provided by an AF of the application A, or may be a PFD 2 generated by the NWDAF by collecting service traffic information of the application A in the SMF or the UPF by using an auxiliary application detection technology. In some possible cases, the UDR may store both a PFD 1 and a PFD 2.

In a specific application scenario, when the UPF obtains, by using the SMF, any one of the PFD 1 and/or the PFD 2 of the application A that are/is provided by the NWDAF and/or the AF in the UDR, and manages traffic of the application A by using the obtained PFD, because there may be a plurality of PFDs in the UDR, the SMF randomly selects one of the PFDs that correspond to the application A and that are stored in the UDR, to complete processing on the traffic of the application A. The PFD provided by the NWDAF may be different from that provided by the AF, and the PFD generated by the NWDAF is obtained by the NWDAF after the NWDAF collects and analyzes the service traffic information of the application A in the SMF or the UPF. Therefore, precision of the PFD generated by the NWDAF is limited by the service traffic information of the application A that can be collected by the NWDAF. In a scenario in which the NWDAF and the AF both provide the PFD, how to help the SMF efficiently select a highest-reliability PFD from the UDR, to improve accuracy of identifying a data traffic purpose of an application by the UPF becomes a problem to be urgently resolved currently.

In view of the foregoing problem, this application proposes that PFDs stored in the UDR by the NEF may be managed, to ensure that each application has a unique corresponding PFD stored in the UDR, and the PFD that corresponds to each application and that is stored in the UDR is a highest-reliability PFD in a plurality of obtaining manners of the PFD, to reduce difficulty in selecting the highest-reliability PFD from the UDR by the SMF.

The solutions provided in this application are implemented in different ways, and the following separately describes the implementation ways with reference to the accompanying drawings.

First, a specific case of implementing the solutions provided in this application in a NEF is described. Refer to FIG. 2. FIG. 2 is a schematic flowchart of a data processing method according to an embodiment of this application.

201: A NEF obtains a first PFD sent by an AF or an NWDAF.

The NEF obtains the first PFD sent by the AF or the NWDAF, where the first PFD includes a first triplet and a first application ID.

Optionally, the first PFD may further include a first character string. The first character string is used to describe a source of the first PFD, that is, is used to describe the first PFD as a PFD generated by the NWDAF or a PFD generated by the AF. For example, the first character string is 0 or 1. When the first character string is 0, it indicates that the first PFD is a PFD generated by the AF. When the first character string is 1, it indicates that the first PFD is a PFD generated by the NWDAF.

It should be noted that the description of specific content of the first character string herein is merely an example. During actual application, the first character string may alternatively be an AF or NWDAF. When the first PFD has a plurality of sources, names of other sources of the first PFD may be directly used for differentiation, or different numbers are used for differentiation. This is not limited herein.

Optionally, the first PFD may further include first time information, where the first time information is a generation moment of the first PFD and validity duration of the first PFD, or a generation moment of the first PFD and an expiration moment of the first PFD.

Optionally, the first PFD may further include at least one of a first flow descriptor (flow descriptor), a first uniform resource locator (uniform resource locator, URL), and first domain name information (domain name information). This is not limited herein.

It should be noted that the description of content included in the first PFD herein is merely an example, and the first PFD may further include other content. This is not limited herein.

The NEF may obtain the first PFD from the AF, or may obtain the first PFD from the NWDAF, or may obtain first PFDs from both the AF and the NWDAF at the same time.

For example, when the NEF obtains the first PFD from the AF, the AF provides the first PFD for the NEF by using a PFD management_create/update/delete request: Nnef_PFDManagement_Create/Update/Delete Request.

For example, when the NEF obtains the first PFD from the NWDAF, the NEF sends an NWDAF analytics subscription packet Nnwdaf_AnalyticsSubscription_AnalyticsSubscription_Subscribe to the NWDAF, to subscribe to PFD information from the NWDAF.

After obtaining the NWDAF analytics subscription packet sent by the NEF, the NWDAF sends first PFD information to the NEF by using an NWDAF analytics subscription notification: Nnwdaf_AnalyticsSubscription_Notify.

It should be noted that, the description of packet exchange between the NEF and the AF and between the NEF and the NWDAF present when the NEF obtains the first PFD herein is merely an example. During actual application, any packet form and content that are agreed upon by the NEF and the NWDAF in advance may be used to trigger the NWDAF to report a latest first PFD in the NWDAF to the NEF. This is not limited herein.

Specifically, there are the following three possible cases of the first PFD information sent by the NWDAF to the NEF.

Case 1: The first PFD is a PFD generated by the NWDAF.

When the first PFD is the PFD generated by the NWDAF, before sending the first PFD information to the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form the first PFD.

Case 2: The first PFD is a PFD generated by the NWDAF and a PFD collected by the NWDAF.

When the first PFD is the PFD generated by the NWDAF and the PFD collected by the NWDAF, before sending the first PFD information to the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form a PFD set generated by the NWDAF.

The NWDAF may further send an event exposure subscription packet Nnef_EventExposure_Subscribe to the NEF, to collect a PFD that can be normally used in the NEF. The NEF reports a PFD currently in use in the NEF to the NWDAF by using an event exposure notification packet Nnef_EventExposure_notify.

The NWDAF may further send a data management retrieval request packet Nadrf_DataManagement_RetrievalRequest to an ADRF, to collect a PFD stored in the ADRF.

Based on the foregoing case, the first PFD may include the PFD set generated by the NWDAF and the PFD currently in use in the NEF; the PFD set generated by the NWDAF and the PFD stored in the ADRF; or the PFD set generated by the NWDAF, the PFD currently in use in the NEF, and the PFD stored in the ADRF.

Further, the first PFD may alternatively be the PFD set generated by the NWDAF and the PFD currently in use in the NEF; the PFD set generated by the NWDAF and the PFD stored in the ADRF; or a PFD obtained by performing deduplication on the PFD set generated by the NWDAF, the PFD currently in use in the NEF, and the PFD stored in the ADRF.

Case 3: The first PFD is a PFD that is not reported to the NEF and that is between a PFD generated by the NWDAF and a PFD collected by the NWDAF.

When the first PFD is the PFD generated by the NWDAF and the PFD collected by the NWDAF, before sending the first PFD information to the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form a PFD set generated by the NWDAF.

The NWDAF may further send an event exposure subscription packet Nnef_EventExposure_Subscribe to the NEF, to collect a PFD that can be normally used in the NEF. The NEF reports a PFD currently in use in the NEF to the NWDAF by using an event exposure notification packet Nnef_EventExposure_notify.

The NWDAF may further send a data management retrieval request packet Nadrf_DataManagement_RetrievalRequest to an ADRF, to collect a PFD stored in the ADRF.

Based on the foregoing case, the first PFD may include a PFD that is not reported to the NEF and that is between the PFD set generated by the NWDAF and the PFD currently in use in the NEF; a PFD that is not reported to the NEF and that is between the PFD set generated by the NWDAF and the PFD stored in the ADRF; or a PFD that is not reported to the NEF and that is among the PFD set generated by the NWDAF, the PFD currently in use in the NEF, and the PFD stored in the ADRF.

It should be noted that the foregoing description of the first PFD is merely an example. During actual application, the first PFD may be any PFD sent by the AF to the NEF or any PFD sent by the NWDAF to the NEF. This is not limited herein.

202: The NEF sends a PFD information query request to a UDR.

After the NEF obtains the first PFD sent by the AF and/or the first PFD sent by the NWDAF, the NEF sends the PFD information query request to the UDR, to query PFD information stored in the UDR.

203: The NEF obtains a second PFD sent by the UDR.

After the NEF sends the PFD information query request to the UDR, the NEF obtains the second PFD sent by the UDR, where the second PFD includes a second triplet and a second application ID, and the second PFD includes all PFDs stored in the UDR.

Optionally, the second PFD may further include a second character string, and the second character string is used to describe a source of the second PFD, that is, is used to describe the second PFD as a PFD generated by the NWDAF or a PFD generated by the AF. For example, the second character string is 0 or 1. When the second character string is 0, it indicates that the second PFD is a PFD generated by the AF. When the second character string is 1, it indicates that the second PFD is a PFD generated by the NWDAF.

It should be noted that the description of specific content of the second character string herein is merely an example. During actual application, the second character string may alternatively be an AF or NWDAF. When the second PFD has a plurality of sources, names of other sources of the second PFD may be directly used for differentiation, or different numbers are used for differentiation. This is not limited herein.

Optionally, the second PFD may further include second time information, where the second time information is a generation moment of the second PFD and validity duration of the second PFD, or a generation moment of the second PFD and an expiration moment of the second PFD.

It should be noted that the description of content included in the second PFD herein is merely an example, and the second PFD may further include other content. This is not limited herein.

204: The NEF sends a PFD set to the UDR based on the first PFD and the second PFD.

After obtaining the first PFD and the second PFD, the NEF sends the PFD set to the UDR based on content of the first PFD and the second PFD, where the PFD set includes at least one of the first PFD or the second PFD.

Optionally, when determining that the first PFD is different from the second PFD, the NEF sends the PFD set to the UDR, where the PFD set includes the first PFD and the second PFD. Specifically, that the first PFD is different from the second PFD described herein specifically means that the first triplet is different from the second triplet, and the first application ID is different from the second application ID.

Optionally, when the first PFD includes the first character string, and the second PFD includes the second character string, after the NEF determines that the first triplet is the same as the second triplet and the first application ID is different from the second application ID, or the first triplet is different from the second triplet and the first application ID is the same as the second application ID, the NEF determines that the first character string is different from the second character string. If the first character string indicates that the source of the first PFD is the AF, the PFD set sent by the NEF to the UDR includes the first PFD. Alternatively, if the first character string indicates that the source of the second PFD is the AF, the PFD set sent by the NEF to the UDR includes the second PFD.

Optionally, when the first PFD includes the first character string and the first time information, and the second PFD includes the second character string and the second time information, the NEF determines that the first triplet is the same as the second triplet and the first application ID is different from the second application ID, or the first triplet is different from the second triplet and the first application ID is the same as the second application ID, and the first character string is the same as the second character string. When the NEF determines, based on the first time information and the second time information, that the generation moment of the first PFD is before the generation moment of the second PFD, the PFD set sent by the NEF to the UDR includes the second PFD. Alternatively, when the NEF determines, based on the first time information and the second time information, that the generation moment of the first PFD is after the generation moment of the second PFD, the PFD set sent by the NEF to the UDR includes the second PFD.

Optionally, when the first PFD includes the first character string and the first time information, and the second PFD includes the second character string and the second time information, the NEF determines that the first triplet is the same as the second triplet and the first application ID is the same as the second application ID. If the NEF determines that the expiration moment of the first PFD is after the expiration moment of the second PFD, the PFD set sent by the NEF to the UDR includes the first PFD. Alternatively, if the NEF determines that the expiration moment of the first PFD is before the expiration moment of the second PFD, the PFD set sent by the NEF to the UDR includes the second PFD.

It should be noted that the NEF may determine, by determining whether the first triplet is the same as the second triplet, whether the first application ID is the same as the second application ID, whether the first character string is the same as the second character string, and a sequence of the first time information and the second time information, content in the PFD set sent to the UDR; or may obtain, in another manner, a specific case of the PFD set sent by the NEF to the UDR in the foregoing plurality of cases. This is not limited herein.

205: The UDR updates the second PFD based on the PFD set.

After receiving the PFD set sent by the NEF, the UDR updates, based on the PFD in the PFD set, the second PFD stored in the UDR.

For example, the PFD set includes the first PFD. The UDR deletes, from the PFD information, a PFD whose triplet is the same as the first triplet and/or a PFD whose application ID is the same as the first triplet, and stores the first PFD, to obtain an updated second PFD.

Optionally, that the PFD set includes the first PFD is still used as an example. The UDR deletes the PFD information stored in the UDR, and stores the first PFD, to obtain an updated second PFD.

It should be noted that, the description of the PFD included in the PFD set and the description of updating the PFD information by the UDR based on the PFD set herein are merely examples. During actual application, setting should be performed with reference to a specific application scenario. This is not limited herein.

In this embodiment of this application, after obtaining the first PFD sent by the AF and/or the first PFD sent by the NWDAF, the NEF obtains the second PFD from the UDR, and sends the PFD set to the UDR based on the first PFD and the second PFD, so that the UDR can update PFD information in the second PFD based on the PFD set. The PFD set includes at least one of the first PFD and the second PFD, the first PFD includes the first triplet and the first application ID, and the second PFD includes the second triplet and the second application ID. In this way, it is ensured that an SMF can determine a unique PFD based on an ID of a to-be-processed application or triplet information of a to-be-processed application, and the PFD is a highest-reliability PFD that corresponds to the to-be-processed application and that may be currently stored in the UDR. This reduces an operation of obtaining, by the SMF, the highest-reliability PFD from a plurality of PFDs that correspond to the to-be-processed application and that are stored in the UDR, so that operation complexity of the SMF is reduced.

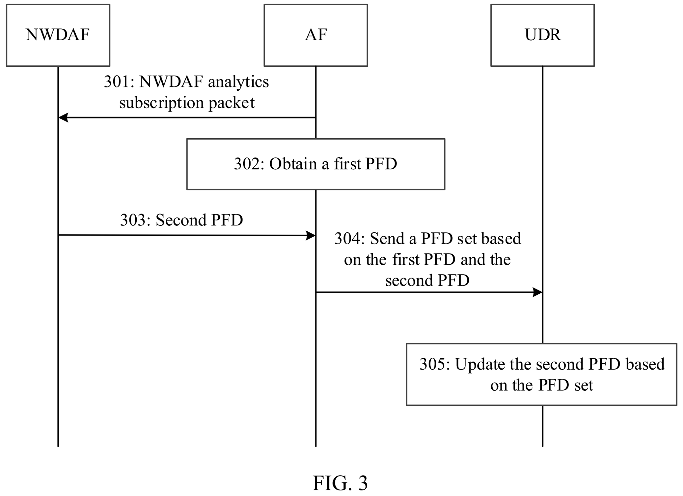

Next, a specific case of implementing the solutions provided in this application in an AF is described. Refer to FIG. 3. FIG. 3 is another schematic flowchart of a data processing method according to an embodiment of this application.

301: An AF sends an NWDAF analytics subscription packet to an NWDAF by using a NEF.

The AF sends the NWDAF analytics subscription packet (Nnwdaf_AnalyticsSubscription_Subscribe) to the NWDAF by using the NEF, to subscribe to a second PFD stored in the NWDAF.

It should be noted that the description herein that the AF obtains latest PFD information in the NWDAF by using the NWDAF analytics subscription packet sent by the NEF to the NWDAF is merely an example. During actual application, any packet form and content that are agreed upon by the AF and the NWDAF in advance may be used to trigger the NWDAF to report the second PFD stored in the NWDAF to the AF. This is not limited herein.

It should be noted that there is no definite sequence for implementing step 301 and step 302, and the description herein is merely an example. During actual application, setting should be performed with reference to a specific application scenario.

302: The AF obtains a first PFD.

The AF obtains the first PFD generated by the AF, where the first PFD includes a first triplet and a first application ID.

Optionally, the first PFD may further include a first character string. The first character string is used to describe a source of the first PFD, that is, is used to describe the first PFD as a PFD generated by the NWDAF or a PFD generated by the AF. For example, the first character string is 0 or 1. When the first character string is 0, it indicates that the first PFD is a PFD generated by the AF. When the first character string is 1, it indicates that the first PFD is a PFD generated by the NWDAF.

It should be noted that the description of specific content of the first character string herein is merely an example. During actual application, the first character string may alternatively be an AF or NWDAF. When the first PFD has a plurality of sources, names of other sources of the first PFD may be directly used for differentiation, or different numbers are used for differentiation. This is not limited herein.

Optionally, the first PFD may further include first time information, where the first time information is a generation moment of the first PFD and validity duration of the first PFD, or a generation moment of the first PFD and an expiration moment of the first PFD.

Optionally, the first PFD may further include at least one of a first flow descriptor (flow descriptor), a first URL, and first domain name information (domain name information). This is not limited herein.

It should be noted that the description of content included in the first PFD herein is merely an example, and the first PFD may further include other content. This is not limited herein.

It should be noted that there is no definite sequence for implementing step 302, step 301, and step 303, and the description herein is merely an example. During actual application, setting should be performed with reference to a specific application scenario.

303: The AF obtains, by using the NEF, the second PFD sent by the NWDAF.

After the AF sends the NWDAF analytics subscription packet to the NWDAF by using the NEF, the AF obtains, by using the NEF, the second PFD sent by the NWDAF. The second PFD is obtained by using an NWDAF analytics subscription notification (Nnwdaf_AnalyticsSubscription_Notify). The second PFD includes a second triplet and a second application ID, and the second PFD includes all PFDs stored in a UDR.

Optionally, the second PFD may further include a second character string, and the second character string is used to describe a source of the second PFD, that is, is used to describe the second PFD as a PFD generated by the NWDAF or a PFD generated by the AF. For example, the second character string is 0 or 1. When the second character string is 0, it indicates that the second PFD is a PFD generated by the AF. When the second character string is 1, it indicates that the second PFD is a PFD generated by the NWDAF.

It should be noted that the description of specific content of the second character string herein is merely an example. During actual application, the second character string may alternatively be an AF or NWDAF. When the second PFD has a plurality of sources, names of other sources of the second PFD may be directly used for differentiation, or different numbers are used for differentiation. This is not limited herein.

Optionally, the second PFD may further include second time information, where the second time information is a generation moment of the second PFD and validity duration of the second PFD, or a generation moment of the second PFD and an expiration moment of the second PFD.

It should be noted that the description of content included in the second PFD herein is merely an example, and the second PFD may further include other content. This is not limited herein.

It should be noted that, the description of packet exchange between the AF and the NWDAF by using the NEF performed when the AF obtains the second PFD herein is merely an example. During actual application, any packet form and content that are agreed upon by the AF and the NWDAF in advance may be used to trigger the NWDAF to report a latest second PFD in the NWDAF to the AF by using the NEF. This is not limited herein.

Specifically, there are the following three possible cases of second PFD information sent by the NWDAF to the AF by using the NEF.

Case 1: The second PFD is a PFD generated by the NWDAF.

When the second PFD is the PFD generated by the NWDAF, before sending the second PFD information to the AF by using the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form the second PFD.

Case 2: The second PFD is a PFD generated by the NWDAF and a PFD collected by the NWDAF.

When the second PFD is the PFD generated by the NWDAF and the PFD collected by the NWDAF, before sending the second PFD information to the AF by using the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form a PFD set generated by the NWDAF.

Optionally, the NWDAF may further send an event exposure subscription packet Nnef_EventExposure_Subscribe to the NEF, to collect a PFD that can be normally used in the NEF. The NEF reports a PFD currently in use in the NEF to the NWDAF by using an event exposure notification packet Nnef_EventExposure_notify.

Optionally, the NWDAF may further send a data management retrieval request packet Nadrf_DataManagement_RetrievalRequest to an ADRF, to collect a PFD stored in the ADRF.

Based on the foregoing case, the second PFD may include the PFD set generated by the NWDAF and the PFD currently in use in the NEF; the PFD set generated by the NWDAF and the PFD stored in the ADRF; or the PFD set generated by the NWDAF, the PFD currently in use in the NEF, and the PFD stored in the ADRF.

Further, the second PFD may alternatively be the PFD set generated by the NWDAF and the PFD currently in use in the NEF; the PFD set generated by the NWDAF and the PFD stored in the ADRF; or a PFD obtained by performing deduplication on the PFD set generated by the NWDAF, the PFD currently in use in the NEF, and the PFD stored in the ADRF.

Case 3: The second PFD is a PFD that is not reported to the NEF and that is between a PFD generated by the NWDAF and a PFD collected by the NWDAF.

When the second PFD is the PFD generated by the NWDAF and the PFD collected by the NWDAF, before sending the second PFD information to the AF by using the NEF, the NWDAF collects, from a UPF, traffic information corresponding to at least one application ID. The NWDAF performs derivation by using a machine learning algorithm based on the traffic information corresponding to the at least one application ID, to obtain a PFD that can describe an application corresponding to the application ID. All PFDs corresponding to applications in the at least one application ID form a PFD set generated by the NWDAF.

The NWDAF may further send an event exposure subscription packet Nnef_EventExposure_Subscribe to the NEF, to collect a PFD that can be normally used in the NEF. The NEF reports a PFD currently in use in the NEF to the NWDAF by using an event exposure notification packet Nnef_EventExposure_notify.

The NWDAF may further send a data management retrieval request packet Nadrf_DataManagement_RetrievalRequest to an ADRF, to collect a PFD stored in the ADRF.

Based on the foregoing case, the second PFD may include a PFD that is not reported to the NEF and that is between the PFD set generated by the NWDAF and the PFD currently in use in the NEF; a PFD that is not reported to the NEF and that is between the PFD set generated by the NWDAF and the PFD stored in the ADRF; or a PFD that is not reported to the NEF and that is among the PFD set generated by the NWDAF, the PFD currently in use in the NEF, and the PFD stored in the ADRF.

It should be noted that the foregoing description of the second PFD is merely an example. During actual application, the second PFD may be any PFD generated by the AF and/or any PFD sent by the NWDAF to the AF by using the NEF. This is not limited herein.

It should be noted that there is no definite sequence for implementing step 302 and step 303, and the description herein is merely an example. During actual application, setting should be performed with reference to a specific application scenario.

304: The AF sends a PFD set to the UDR by using the NEF based on the first PFD and the second PFD.

After obtaining the first PFD and the second PFD, the AF sends the PFD set to the UDR by using the NEF based on content of the first PFD and the second PFD, where the PFD set includes at least one of the first PFD or the second PFD.

Optionally, when the AF determines that the first PFD is different from the second PFD, the AF sends the PFD set to the UDR by using the NEF, where the PFD set includes the first PFD and the second PFD. Specifically, that the first PFD is different from the second PFD described herein specifically means that the first triplet is different from the second triplet, and the first application ID is different from the second application ID.

Optionally, when the first PFD includes the first character string, and the second PFD includes the second character string, after the AF determines that the first triplet is the same as the second triplet and the first application ID is different from the second application ID, or the first triplet is different from the second triplet and the first application ID is the same as the second application ID, the AF determines that the first character string is different from the second character string. If the first character string indicates that the source of the first PFD is the AF, the PFD set sent by the AF to the UDR by using the NEF includes the first PFD. Alternatively, if the first character string indicates that the source of the second PFD is the AF, the PFD set sent by the AF to the UDR by using the NEF includes the second PFD.

Optionally, when the first PFD includes the first character string and the first time information, and the second PFD includes the second character string and the second time information, the AF determines that the first triplet is the same as the second triplet and the first application ID is different from the second application ID, or the first triplet is different from the second triplet and the first application ID is the same as the second application ID; and the first character string is the same as the second character string. When the AF determines, based on the first time information and the second time information, that the generation moment of the first PFD is before the generation moment of the second PFD, the PFD set sent by the AF to the UDR by using the NEF includes the second PFD. Alternatively, when the AF determines, based on the first time information and the second time information, that the generation moment of the first PFD is after the generation moment of the second PFD, the PFD set sent by the AF to the UDR by using the NEF includes the second PFD.

Optionally, when the first PFD includes the first character string and the first time information, and the second PFD includes the second character string and the second time information, the AF determines that the first triplet is the same as the second triplet and the first application ID is the same as the second application ID. If the AF determines that the expiration moment of the first PFD is after the expiration moment of the second PFD, the PFD set sent by the AF to the UDR by using the NEF includes the first PFD. Alternatively, if the AF determines that the expiration moment of the first PFD is before the expiration moment of the second PFD, the PFD set sent by the AF to the UDR by using the NEF includes the second PFD.

It should be noted that the AF may determine, by determining whether the first triplet is the same as the second triplet, whether the first application ID is the same as the second application ID, and whether the first character string is the same as the second character string, and determining a sequence of generation moments of the first PFD and the second PFD and/or a sequence of expiration moments of the first PFD and the second PFD based on the first time information and the second time information, content in the PFD set sent to the UDR; or may obtain, in another manner, a specific case of the PFD set sent by the NEF to the UDR in the foregoing plurality of cases. This is not limited herein.

305: The UDR updates the second PFD based on the PFD set.

After receiving the PFD set sent by the NEF, the UDR updates, based on the PFD in the PFD set, the second PFD stored in the UDR.

For example, the PFD set includes the first PFD. The UDR deletes, from the PFD information, a PFD whose triplet is the same as the first triplet and/or a PFD whose application ID is the same as the first triplet, and stores the first PFD, to obtain an updated second PFD.

Optionally, that the PFD set includes the first PFD is still used as an example. The UDR deletes the PFD information stored in the UDR, and stores the first PFD, to obtain an updated second PFD.

It should be noted that, the description of the PFD included in the PFD set and the description of updating the PFD information by the UDR based on the PFD set herein are merely examples. During actual application, setting should be performed with reference to a specific application scenario. This is not limited herein.

In this embodiment of this application, the AF may obtain the first PFD generated by the AF, obtain the second PFD from the NWDAF by using the NEF after obtaining the first PFD, and send the PFD set to the UDR by using the NEF based on the first PFD and the second PFD, where the PFD set includes at least one of the first PFD and the second PFD, the first PFD includes the first triplet and the first application ID, and the second PFD includes the second triplet and the second application ID. In this way, the UDR can efficiently update PFD information in the second PFD based on the PFD. Processing the first PFD and the second PFD in the AF and sending the PFD set to the UDR reduce computation pressure of the NEF, and improve mobility of PFD redundancy processing in a network.

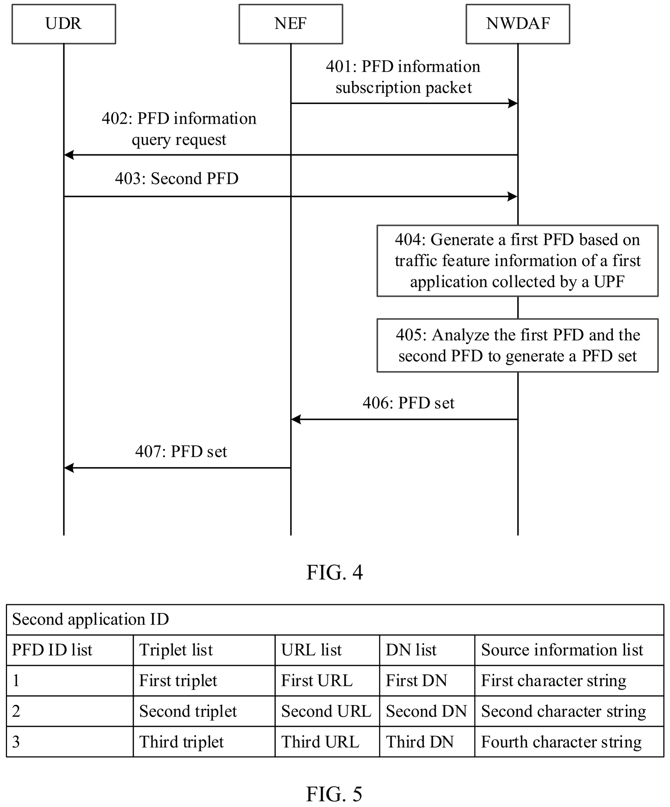

In another implementation way of the solutions provided in this application, an NWDAF may obtain a second PFD stored in a UDR, collect traffic information of an application from a UPF, and obtain a first PFD through analysis based on the traffic information of the application. After obtaining the second PFD and the first PFD, the NWDAF analyzes the first PFD and the second PFD, determines, by using a second identifier carried in the second PFD, whether to update the second PFD by using the first PFD, and sends at least one of the first PFD or the second PFD to the UDR for storage for subsequent use. For a specific implementation, refer to FIG. 4. FIG. 4 is another schematic flowchart of a data processing method according to an embodiment of this application.

401: A NEF sends a PFD information subscription packet to an NWDAF.

The NEF sends a PFD information request packet to the NWDAF, where the PFD request packet carries a second application ID.

For example, the PFD information subscription packet may be: Nnwdaf_AnalyticsSubscription_Subscribe.

It may be understood that the description of the second application ID carried in the PFD request packet herein is merely an example, and the PFD information subscription packet may alternatively not carry an application ID. This is not limited herein.

402: The NWDAF sends a PFD information query request to a UDR by using the NEF.

After obtaining the PFD information subscription packet from the NEF, the NWDAF sends the PFD information query request to the UDR by using the NEF, where the PFD information query request carries the second application ID.

For example, the NWDAF sends the PFD information query request to the UDR in two steps: First, the NWDAF sends a PFD information query request to the NEF, and then the NEF forwards the PFD information query request to the UDR.

The PFD information query request sent by the NWDAF to the NEF may be: Nnef_PFDManagement_Fetch(Event ID=In use PFDs,Event Filter-Application ID).

The PFD information query request forwarded by the NEF to the UDR may be: Nudr_DM_Query(Data Key=ApplicationID).

It may be understood that the description of content of the PFD information query request herein is merely an example. During actual application, setting should be performed with reference to a specific application scenario. This is not limited herein.

403: The UDR sends a second PFD to the NWDAF by using the NEF.

After the UDR obtains the PFD information query request from the NWDAF, the UDR sends the second PFD to the NWDAF by using the NEF, where the second PFD includes the second application ID, a second triplet, and a second character string, and the second character string is used to describe a source of the second PFD. For example, the second character string may indicate that the source of the second PFD is the NWDAF or the source of the second PFD is an AF. This is not limited herein.

Optionally, the second PFD may further include a second URL and a second DN.

Specifically, the UDR retrieves, from all PFD information stored in the UDR, a PFD whose application ID is the second application ID, to obtain the second PFD, and sends the second PFD to the NWDAF by using the NEF.

For example, the UDR sends the second PFD to the NWDAF by using the NEF in two steps: First, the UDR sends the second PFD to the NEF, and then the NEF forwards the second PFD to the NWDAF.

That the UDR sends the second PFD to the NEF may be: Nudr_DM_Notify(PFD information(PFD,source); and that the NEF forwards the second PFD to the NWDAF may be: Nnef_PFDManagement_Fetch Response(PFD information(PFD,source).

It may be understood that the description of a form in which the UDR sends the second PFD to the NWDAF by using the NEF herein is merely an example. During actual application, setting should be performed with reference to a specific application scenario. This is not limited herein.

For example, a form of a PFD stored in the UDR may be different from a form of the PFD in a transfer process. For example, when a plurality of PFDs are stored in the UDR, a form of the PFDs may be a list or a table. Herein, a table is used as an example. For a specific form of the table, refer to FIG. 5. FIG. 5 is a diagram of PFDs according to an embodiment of this application.

It can be learned from FIG. 5 that, when a PFD is stored in the UDR, PFDs associated with an application are uniformly stored. For example, a second application ID corresponds to a PFD ID list (list), a triplet list, a URL list, a DN list, and source information (source information) list. The PFD ID list stores a plurality of PFD IDs, for example, a first PFD ID, a second PFD ID, and a third PFD ID. These PFD IDs may be unique in the application, or may be globally unique. This is not limited herein.

The triplet list stores a plurality of triplets, for example, a first triplet, a second triplet, and a third triplet.

The URL list stores a plurality of URLs, for example, a first URL, a second URL, and a third URL.

The DN list stores a plurality of NDs, for example, a first DN, a second DN, and a third DN.

The source information list stores a plurality of character strings, for example, a first character string, a second character string, and a third character string.

As shown in FIG. 5, when the PFDs are stored in the UDR, a correspondence between elements in lists is further included. A specific storage form is not limited herein.

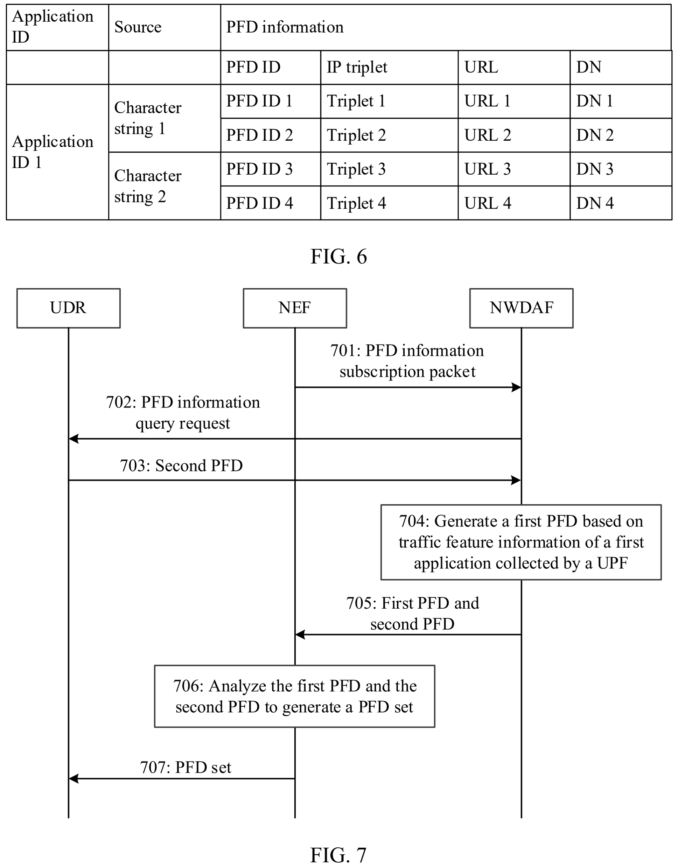

In another possible case, a storage form of a PFD in the UDR is shown in FIG. 6. FIG. 6 is another diagram of PFDs according to an embodiment of this application.

It can be learned from FIG. 6 that, when a plurality of PFDs are stored in the UDR, and when PFDs associated with an application are uniformly stored, partitioning is further performed based on sources of the PFDs.

For example, a source corresponding to an application 1 include an NWDAF and an AF, sources of a PFD 1 and a PFD 2 are the NWDAF, and sources of a PFD 3 and a PFD 4 are the AF.

In storage in the UDR, storage forms of the application 1 and PFDs corresponding to the application 1 are shown in FIG. 6. An application ID corresponding to the application 1 is an application ID 1, a PFD whose source is the NWDAF is marked by using a character string 1 in a source field, and a PFD whose source is the AF is marked by using a character string 2 in the source field. In addition, information about the PFD 1, the PFD 2, the PFD 3, and the PFD 4 is stored in a PFD information (information) field.

Specifically, for the information about the PFD 1, a PFD ID 1, a triplet 1, a URL 1, and a DN 1 may be store in the PFD information field; for the information about the PFD 2, a PFD ID 2, a triplet 2, a URL 2, and a DN 2 may be stored in the PFD information field; for the information about the PFD 3, a PFD ID 3, a triplet 3, a URL 3, and a DN 3 may be stored in the PFD information field; and for the information about the PFD 4, a PFD ID 4, a triplet 4, a URL 4, and a DN 4 may be stored in the PFD information field.

As shown in FIG. 6, when the PFDs are stored in the UDR, a correspondence between elements is further implied. A specific storage form is not limited herein.

It may be understood that the description of a storage form of the PFD in the UDR herein is merely an example. During actual application, a specific storage form and storage content of the PFD may be adjusted with reference to a specific application scenario and a requirement to facilitate storage. This is not limited herein.

A representation form of the second PFD in a transfer process is as follows:
a second PFD ID;
the second triplet;
the second URL;
the second DN; and
the second character string (second source information).

It may be understood that, the descriptions of different forms of the second PFD herein are merely examples. During actual application, setting should be performed with reference to a specific application scenario. This is not limited herein.

404: The NWDAF generates a first PFD based on traffic feature information of a first application collected by a UPF.

The NWDAF generates the first PFD based on the traffic feature information of the first application collected by the UPF. The first PFD includes a first triplet, a first application ID, and a first character string. The first character string is used to describe a source of the first PFD. For example, the first character string indicates that the source of the first PFD is the NWDAF or the AF. An application ID of the first application includes the first application ID, and both the first PFD and the second PFD are PFDs corresponding to the first application. Therefore, the application ID of the first application includes the second application ID.

Optionally, because the application ID of the first application changes in a port switching process, the first application ID and the second application ID may be the same or may be different. This is not limited herein.

Optionally, the first PFD may further include a first URL and a first DN.

A form of the first PFD in a transfer process and a form of the first PFD stored in the UDR are similar to those of the second PFD. Details are not described herein again.

405: The NWDAF analyzes the first PFD and the second PFD to generate a PFD set.

After obtaining the first PFD and the second PFD, the NWDAF obtains the PFD set by analyzing content of the first PFD and the second PFD, where the PFD set includes at least one of the first PFD and the second PFD.

In the example of this embodiment of this application, the first PFD is generated by the NWDAF, the second PFD is a PFD that is obtained by the NWDAF from the UDR by using the NEF, and the NWDAF obtains the second PFD by using the NEF before the NWDAF generates the first PFD. Therefore, the first PFD is a PFD that is newer than the second PFD.

Further, in more possible cases, the first PFD may further carry first time information, the second PFD may further carry second time information, and the NWDAF may determine recency of the first PFD and the second PFD based on the first time information and the second time information. This is not limited herein.

Specifically, when analyzing the first PFD and the second PFD, the NWDAF analyzes whether the first application ID is the same as the second application ID, whether the first triplet is the same as the second triplet, whether the first URL is the same as the second URL, whether the first DN is the same as the second DN, and whether the first character string is the same as the second character string, to implement deduplication on the first PFD and the second PFD. Definition of whether the first URL is the same as the second URL may be that all content in URLs is completely the same, or may be that whether some selected features in the first URL are the same as those in the second URL, for example, a host name (host name), and if selected features are the same, it is considered that the first URL is the same as the second URL; otherwise, it is considered that the first URL is different from the second URL. This is not limited herein.

A deduplication process includes the following four scenarios.

When the first application ID of the first PFD is the same as the second application ID of the second PFD and some fields of the PFDs are different, if the first character string indicates that the source of the first PFD is the NWDAF, and the second character string indicates that the source of the second PFD is the AF, where when at least one of the following cases occurs: the first triplet is different from the second triplet, the first URL is different from the second URL, and the first DN is different from the second DN, it may be considered that some fields of the PFDs are different, the PFD set includes the first PFD and the second PFD. In some cases in which the UDR is only notified that a PFD needs to be updated or added, the PFD set does not need to be sent to the UDR. This is not limited herein. For example, information about adding the first PFD may be transferred to the UDR by using an adding packet, or information about adding the first PFD may be transferred to the UDR by using an adding packet and information about updating the second PFD may be transferred to the UDR by using an update packet. This is not limited herein.

When the first application ID is the same as the second application ID and some fields of the PFDs are different, if the first character string indicates that the source of the first PFD is the NWDAF, and the second character string indicates that the source of the second PFD is the NWDAF, where when at least one of the following cases occurs: the first triplet is different from the second triplet, the first URL is different from the second URL, and the first DN is different from the second DN, it may be considered that some fields of the PFDs are different, the PFD set includes the first PFD. During specific implementation, the second PFD may be directly replaced with the first PFD; or the second PFD may be updated based on a part that is different from the second PFD and that is of the first PFD, and updated content is updated to the PFD set. For example, when the second PFD carries the second PFD ID, the PFD set further includes a correspondence between the first PFD and the second PFD ID, and the UDR is notified, by using an update packet, of replacing the second PFD with the first PFD; or the second PFD may be kept unchanged and the first PFD is added to the UDR. This is not limited herein.

The PFD set includes the first PFD when the first application ID is different from the second application ID, the first triplet is the same as the second triplet, the first character string indicates that the source of the first PFD is the NWDAF, and the second character string indicates that the source of the second PFD is the NWDAF. During specific implementation, the second PFD may be directly replaced with the first PFD; or the second PFD may be updated based on a part that is different from the second PFD and that is of the first PFD, and updated content is updated to the PFD set. For example, when the second PFD carries the second PFD ID, the PFD set includes a correspondence between the first PFD and the second PFD ID, and the UDR is notified, by using an update packet, of replacing the second PFD with the first PFD. This is not limited herein.

The PFD set includes the second PFD when the first application ID is different from the second application ID, the first triplet is the same as the second triplet, the first character string indicates that the source of the first PFD is the NWDAF, and the second character string indicates that the source of the second PFD is the AF. During specific implementation, PFD update does not need to be performed on the UDR. In some cases in which the UDR is only notified that a PFD needs to be updated or added, the PFD set does not need to be sent to the UDR. This is not limited herein.

In the description of this embodiment of this application, when the NWDAF analyzes the first PFD and the second PFD to generate the PFD set, a followed primary principle is: When the first PFD conflicts with the second PFD (that is, when the first PFD and the second PFD are repeated), if a PFD whose source is the AF exists in the first PFD and the second PFD, the PFD whose source is the AF is unconditionally reserved; and
if sources of the PFDs are the same, a latest PFD is preferentially reserved, where when the PFDs carries time information, recency of the PFDs is determined based on the time information; or when the PFDs do not carry time information, a PFD directly obtained from the NWDAF is the latest by default, and the PFD directly obtained from the NWDAF is preferentially reserved.

It may be understood that, the descriptions of a specific basis and a result of analyzing the first PFD and the second PFD by the NWDAF to generate the PFD set herein are merely examples. During actual application, the PFD set may be obtained in one or more determining manner or through analysis from another perspective. This is not limited herein.

Further, because the UDR sends the second PFD to the NWDAF in step 403, after the PFD set is generated, the NWDAF may further update the PFD set based on the second PFD, to obtain an updated PFD set. The updated PFD set may include only a part that needs to be changed relative to the second PFD, and this part of content that needs to be changed is identified.

For example, when the PFD set includes the first PFD and the second PFD, after the PFD set is updated based on the second PFD, an updated PFD set includes the first PFD and an incremental update identifier, and the incremental update identifier indicates the NEF to directly add content in the updated PFD set to the UDR after receiving the updated PFD set. A specific form and content of the incremental update identifier are not limited herein.

Alternatively, when the PFD set includes the second PFD, after the PFD set is updated based on the second PFD, an updated PFD set includes only an incremental update identifier.

Alternatively, when the PFD set includes the first PFD, after the PFD set is updated based on the second PFD, an updated PFD set includes the first PFD and a delta update identifier, and the delta update identifier indicates the UDR to delete the second PFD. A specific form and content of the delta update identifier are not limited herein.

It may be understood that the description of a manner of updating specific content in the PFD set herein is merely an example. During actual application, identification should be performed with reference to a specific application scenario. This is not limited herein.

In this embodiment of this application, PFD set transfer relative to PFD delta or PFD increment in the UDR reduces a bandwidth occupied for PFD transfer, saves network resources, and improves information transfer efficiency.

406: The NWDAF sends the PFD set to the NEF.

After the NWDAF analyzes the first PFD and the second PFD to generate the PFD set, the NWDAF sends the PFD set to the NEF, where the PFD set includes at least one of the first PFD and the second PFD.

Specifically, that the NWDAF sends the PFD set to the NEF may be: Nnwdaf_AnalyticsSubscription_Notify(Derived PFD info).

It may be understood that the description of a transmission manner of the PFD set herein is merely an example. During actual application, setting should be performed with reference to a specific application scenario. This is not limited herein.

407: The NEF sends the obtained PFD set to the UDR.

After obtaining the PFD set from the NWDAF, the NEF sends the PFD set to the UDR.

Specifically, that the NEF sends the obtained PFD set to the UDR may be: Nudr_DM_Update/Create Request/Response.

It may be understood that the description of a transmission manner of the PFD set herein is merely an example. During actual application, setting should be performed with reference to a specific application scenario. This is not limited herein.

In this embodiment of this application, the NWDAF collects the second PFD stored in the UDR, generates the first PFD based on the traffic information of the application, analyzes the first PFD and the second PFD to generate the PFD set, and sends the PFD set to the UDR, so that the UDR can update PFD information in the second PFD based on the PFD set. The PFD set includes at least one of the first PFD and the second PFD, to ensure that when there are a plurality of associated PFDs, a highest-reliability PFD is stored in the UDR for later selection. This improves reliability of the solutions, and also simplifies operation in subsequently selecting a PFD by another network element.

In another implementation way of the solutions provided in this application, an NWDAF may obtain a second PFD stored in a UDR, collect traffic information of an application from a UPF, and obtain a first PFD through analysis based on the traffic information of the application. After obtaining the second PFD and the first PFD, the NWDAF sends the first PFD and the second PFD to a NEF. The NEF analyzes the first PFD and the second PFD, determines, by using a second identifier carried in the second PFD, whether to update the second PFD by using the first PFD, and sends at least one of the first PFD or the second PFD to the UDR for storage for subsequent use. For a specific implementation, refer to FIG. 7. FIG. 7 is a schematic flowchart of a data processing method according to an embodiment of this application.

701: A NEF sends a PFD information subscription packet to an NWDAF.

702: The NWDAF sends a PFD information query request to a UDR by using the NEF.

703: The UDR sends a second PFD to the NWDAF by using the NEF.

704: The NWDAF generates a first PFD based on traffic feature information of a first application collected by a UPF.

It may be understood that implementations of step 701 to step 704 are similar to those of step 401 to step 404 in FIG. 4. This is not limited herein.

705: The NWDAF sends the first PFD and the second PFD to the NEF.

After obtaining the first PFD and the second PFD, the NWDAF sends the first PFD and the second PFD to the NEF.

Specifically, that the NWDAF sends the first PFD and the second PFD to the NEF may be: Nnwdaf_AnalyticsSubscription_Notify(Derived PFD info).

It may be understood that the description of a specific transfer form in which the NWDAF sends the first PFD and the second PFD to the NEF herein is merely an example. During actual application, setting should be performed with reference to a specific application scenario. This is not limited herein.

706: The NEF analyzes the first PFD and the second PFD to generate a PFD set.

After obtaining the first PFD and the second PFD, the NEF obtains the PFD set by analyzing content of the first PFD and the second PFD, where the PFD set includes at least one of the first PFD and the second PFD.

In the example of this embodiment of this application, the first PFD is generated by the NWDAF, the second PFD is a PFD that is obtained by the NWDAF from the UDR by using the NEF, and the NWDAF obtains the second PFD by using the NEF before the NWDAF. Therefore, the first PFD is a PFD that is newer than the second PFD.

Further, in more possible cases, the first PFD may further carry first time information, the second PFD may further carry second time information, and the NEF may determine recency of the first PFD and the second PFD based on the first time information and the second time information. This is not limited herein.

Specifically, when analyzing the first PFD and the second PFD, the NEF analyzes whether a first application ID is the same as a second application ID, whether a first triplet is the same as a second triplet, whether a first URL is the same as a second URL, whether a first DN is the same as a second DN, and whether a first character string is the same as a second character string, to implement deduplication on the first PFD and the second PFD. A deduplication process includes the following four scenarios.

When the first application ID of the first PFD is the same as the second application ID of the second PFD and some fields of PFDs are different, if the first character string indicates that a source of the first PFD is the NWDAF, and the second character string indicates that a source of the second PFD is an AF, where when at least one of the following cases occurs: the first triplet is different from the second triplet, the first URL is different from the second URL, and the first DN is different from the second DN, it may be considered that some fields of the PFDs are different, the PFD set includes the first PFD and the second PFD. In some cases in which the UDR is only notified that a PFD needs to be updated or added, the PFD set does not need to be sent to the UDR. This is not limited herein. Information about adding the first PFD may be transferred to the UDR by using an adding packet, or information about adding the first PFD may be transferred to the UDR by using an adding packet and information about updating the second PFD may be transferred to the UDR by using an update packet. This is not limited herein.

When the first application ID is the same as the second application ID and some fields of PFDs are different, if the first character string indicates that a source of the first PFD is the NWDAF, and the second character string indicates that a source of the second PFD is the NWDAF, where when at least one of the following cases occurs: the first triplet is different from the second triplet, the first URL is different from the second URL, and the first DN is different from the second DN, it may be considered that some fields of the PFDs are different, the PFD set includes the first PFD. During specific implementation, the second PFD may be directly replaced with the first PFD; or the second PFD may be updated based on a part that is different from the second PFD and that is of the first PFD, and updated content is updated to the PFD set. For example, when the second PFD carries a second PFD ID, the PFD set includes a correspondence between the first PFD and the second PFD ID, and the UDR is notified, by using an update packet, of replacing the second PFD with the first PFD; or the second PFD may be kept unchanged and the first PFD is added to the UDR. This is not limited herein.

The PFD set includes the first PFD when the first application ID is different from the second application ID, the first triplet is the same as the second triplet, the first character string indicates that a source of the first PFD is the NWDAF, and the second character string indicates that a source of the second PFD is the NWDAF. During specific implementation, the second PFD may be directly replaced with the first PFD; or the second PFD may be updated based on a part that is different from the second PFD and that is of the first PFD, and updated content is updated to the PFD set. For example, when the second PFD carries a second PFD ID, the PFD set includes a correspondence between the first PFD and the second PFD ID, and the UDR is notified, by using an update packet, of replacing the second PFD with the first PFD. This is not limited herein.

The PFD set includes the second PFD when the first application ID is different from the second application ID, the first triplet is the same as the second triplet, the first character string indicates that a source of the first PFD is the NWDAF, and the second character string indicates that a source of the second PFD is an AF. During specific implementation, PFD update does not need to be performed on the UDR. In some cases in which the UDR is only notified that a PFD needs to be updated or added, the PFD set does not need to be sent to the UDR. This is not limited herein.

In the description of this embodiment of this application, when the NEF analyzes the first PFD and the second PFD to generate the PFD set, a followed primary principle is: When the first PFD conflicts with the second PFD (that is, when the first PFD and the second PFD are repeated), if a PFD whose source is the AF exists in the first PFD and the second PFD, the PFD whose source is the AF is unconditionally reserved; and
if sources of the PFDs are the same, a latest PFD is preferentially reserved, where when the PFDs carries time information, recency of the PFDs is determined based on the time information; or when the PFDs do not carry time information, the first PFD is the latest by default, and the first PFD is preferentially reserved.

It may be understood that, the descriptions of a specific basis and a result of analyzing the first PFD and the second PFD by the NEF to generate the PFD set herein are merely examples. During actual application, the PFD set may be obtained in one or more determining manner or through analysis from another perspective. This is not limited herein.

Further, because the UDR sends the second PFD to the NWDAF in step 703, after the PFD set is generated, the NEF may further update the PFD set based on the second PFD, to obtain an updated PFD set. The updated PFD set may include only a part that needs to be changed relative to the second PFD, and this part of content that needs to be changed is identified.

For example, when the PFD set includes the first PFD and the second PFD, after the NEF updates the PFD set based on the second PFD, an updated PFD set includes the first PFD and an incremental update identifier, and the incremental update identifier indicates the NEF to directly add content in the updated PFD set to the UDR after receiving the updated PFD set. A specific form and content of the incremental update identifier are not limited herein.

Alternatively, when the PFD set includes the second PFD, after the NEF updates the PFD set based on the second PFD, an updated PFD set includes only an incremental update identifier.

Alternatively, when the PFD set includes the first PFD, after the NEF updates the PFD set based on the second PFD, an updated PFD set includes the first PFD and a delta update identifier, and the delta update identifier indicates the UDR to delete the second PFD. A specific form and content of the delta update identifier are not limited herein.

It may be understood that the description of a manner of updating specific content in the PFD set herein is merely an example. During actual application, identification should be performed with reference to a specific application scenario. This is not limited herein.

In this embodiment of this application, PFD set transfer relative to PFD delta or PFD increment in the UDR reduces a bandwidth occupied for PFD transfer, saves network resources, and improves information transfer efficiency.

707: The NEF sends the PFD set to the UDR.

After the NEF analyzes the first PFD and the second PFD to generate the PFD set, the NEF sends the PFD set to the UDR, where the PFD set includes at least one of the first PFD and the second PFD.

Specifically, that the NEF sends the obtained PFD set to the UDR may be: Nudr_DM_Update/Create Request/Response.

It may be understood that the description of a transmission manner of the PFD set herein is merely an example. During actual application, setting should be performed with reference to a specific application scenario. This is not limited herein.

In this embodiment of this application, the NEF collects the second PFD stored in the UDR and the first PFD generated by the NWDAF, analyzes the first PFD and the second PFD to generate the PFD set, and sends the PFD set to the UDR, so that the UDR can update PFD information in the second PFD based on the PFD set. The PFD set includes at least one of the first PFD and the second PFD, to ensure that when there are a plurality of associated PFDs, a highest-reliability PFD is stored in the UDR for later selection. This improves reliability of the solutions, and also simplifies operation in subsequently selecting a PFD by another network element.

In the foregoing solutions provided in this embodiment of this application, that the first PFD carries the first character string to identify the source of the first PFD and the second PFD carries the second character string to identify the source of the second PFD is described. In addition, in some specific cases, other identifiers may be used to distinguish sources of the first PFD and the second PFD. For example, if a PFD carries a third character string, it may be considered by default that a source of the PFD is a preset device. The preset device may be the NWDAF or the AF. This is not limited herein.

With reference to the solutions described in FIG. 4 and FIG. 7, when the preset device is an AF, a first PFD includes a first triplet, a first application ID, a first URL, and a first DN, and a second PFD includes a second triplet, a second application ID, a second URL, and a second DN. Optionally, if a source of the second PFD is the AF, the second PFD may further include a third character string.

When the preset device is an NWDAF, a first PFD includes a first triplet, a first application ID, a first URL, a first DN, and a third character string, and the second PFD includes a second triplet, a second application ID, a second URL, and a second DN. Optionally, if a source of the second PFD is the NWDAF, the second PFD may further include a third character string.

In this embodiment of this application, a mark is added to a PFD whose source is the preset device, to help distinguish between different sources of PFDs. This effectively reduces PFD content reduction when there are only two cases of the sources of the PFDs, and helps reduce network resource consumption in a PFD transmission process.

The foregoing describes the data processing method provided in embodiments of this application. The following describes a data processing apparatus provided in embodiments of this application with reference to the accompanying drawings.

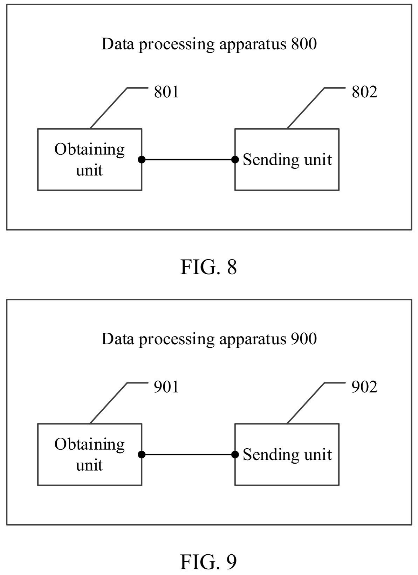

Refer to FIG. 8. FIG. 8 is a diagram of a data processing apparatus according to an embodiment of this application.

The data processing apparatus 800 includes:
an obtaining unit 801, configured to obtain a first packet flow description PFD, where the first PFD includes a first triplet and a first application ID; and
the obtaining unit 801 is further configured to obtain a second PFD sent by a second device, where the second PFD includes a second triplet and a second application ID; and
a sending unit 802, configured to send a PFD set to a UDR based on the first PFD and the second PFD, where the PFD set includes at least one of the first PFD or the second PFD.

Optionally, the first PFD further includes a first character string, the second PFD further includes a second character string, the first character string is used to describe a source of the first PFD, and the second character string is used to describe a source of the second PFD.

Optionally, the sending unit 802 is specifically configured to:
when determining that the first triplet is different from the second triplet and the first application ID is different from the second application ID, send, by the first device, the PFD set to the UDR, where the PFD set includes the first PFD and the second PFD; or
when determining that the first triplet is different from the second triplet and the first application ID is the same as the second application ID, or the first triplet is the same as the second triplet and the first application ID is different from the second application ID, determine, by the first device, that the first character string is different from the second character string, and determine, by the first device, that the first character string indicates that the source of the first PFD is an AF, and send the PFD set to the UDR, where the PFD set includes the first PFD; or determine, by the first device, that the first character string indicates that the source of the first PFD is an NWDAF, and send the PFD set to the UDR, where the PFD set includes the second PFD.

Optionally, the first PFD further includes first time information, and the second PFD further includes second time information.

The sending unit 802 is specifically configured to:
when determining that the first triplet is different from the second triplet and the first application ID is the same as the second application ID, or the first triplet is the same as the second triplet and the first application ID is different from the second application ID, determine, by the first device, that the first character string is the same as the second character string, and determine, by the first device based on the first time information and the second time information, that the first PFD is generated before the second PFD, and send the PFD set to the UDR, where the PFD set includes the second PFD; or determine, by the first device based on the first time information and the second time information, that the first PFD is generated after the second PFD, and send the PFD set to the UDR, where the PFD set includes the first PFD; or
when determining that the first triplet is the same as the second triplet and the first application ID is the same as the second application ID, determine, by the first device based on the first time information and the second time information, that the first PFD expires before the second PFD, and send the PFD set to the UDR, where the PFD set includes the second PFD; or determine, by the first device based on the first time information and the second time information, that the first PFD expires after the second PFD, and send the PFD set to the UDR, where the PFD set includes the first PFD.

Optionally, the first time information includes an expiration moment of the first PFD and a generation moment of the first PFD, or validity duration of the first PFD and a generation moment of the first PFD, and the second time information includes an expiration moment of the second PFD and a generation moment of the second PFD, or validity duration of the second PFD and a generation moment of the second PFD.

Optionally, a generation moment of the first PFD is after a generation moment of the second PFD.

The sending unit 802 is specifically configured to:
send, by the first device, the PFD set to the UDR when the first application ID is the same as the second application ID, at least one of the following cases occurs: the first triplet is different from the second triplet, a first URL is different from a second URL, and a first DN is different from a second DN, the first character string indicates that the source of the first PFD is an NWDAF, and the second character string indicates that the source of the second PFD is generated by an AF, where the PFD set includes the first PFD and the second PFD; or
send, by the first device, the PFD set to the UDR when the first application ID is the same as the second application ID, at least one of the following cases occurs: the first triplet is different from the second triplet, a first URL is different from a second URL, and a first DN is different from a second DN, the first character string indicates that the source of the first PFD is an NWDAF, and the second character string indicates that the source of the second PFD is an NWDAF, where the PFD set includes the first PFD.

Optionally, a generation moment of the first PFD is after a generation moment of the second PFD.

The sending unit 802 is specifically configured to:
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an NWDAF, where the PFD set includes the first PFD; or
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an AF, where the PFD set includes the second PFD.

Optionally, the second PFD further includes a third character string, and the third character string indicates that the PFD is a PFD generated by a preset device.

Optionally, the first device includes a network exposure function NEF and the second device includes a unified data repository UDR; or the first device includes an application function AF and the second device includes an NWDAF.

Optionally, when the first device includes an NWDAF, the second device includes a UDR or a NEF, and the first PFD is a PFD generated by the NWDAF; or when the first device includes a NEF, the second device includes a UDR.

Refer to FIG. 9. FIG. 9 is another diagram of a data processing apparatus according to an embodiment of this application.

The data processing apparatus 900 includes:
an obtaining unit 901, configured to obtain a PFD information query request sent by a first device; and
a sending unit 902, configured to send a second PFD to the first device, where the second PFD includes a second triplet and a second application ID; and
the obtaining unit 901 is further configured to obtain a PFD set sent by the first device, where the PFD set includes at least one of a first PFD and the second PFD, and the first PFD includes a first triplet and a first application ID.

Optionally, the second PFD further includes a second character string, the first PFD further includes a first character string, the first character string is used to describe a source of the first PFD, and the second character string is used to describe a source of the second PFD.

Optionally, the first PFD further includes first time information, and the second PFD further includes second time information.

Optionally, the second PFD further includes a third character string, and the third character string indicates that the PFD is a PFD generated by a preset device.

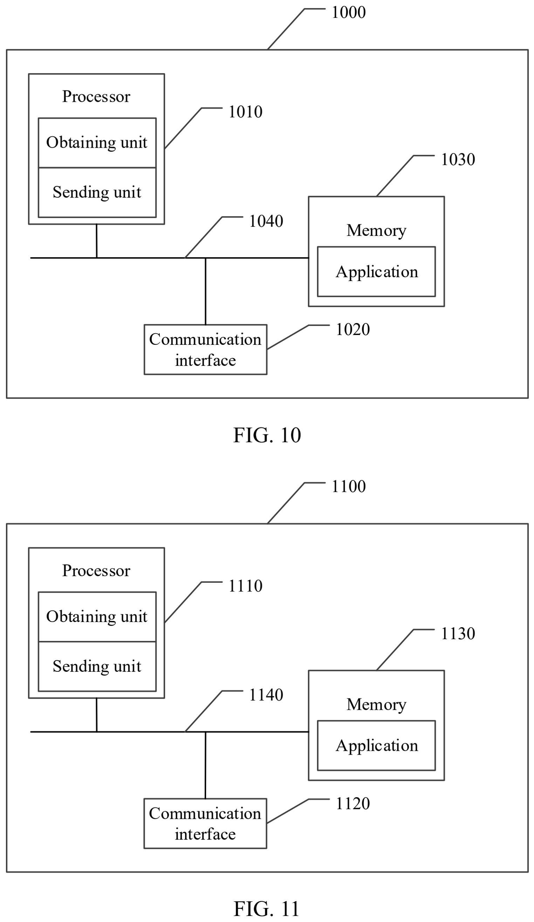

Refer to FIG. 10. FIG. 10 is a diagram of another structure of a data processing apparatus according to an embodiment of this application. The data processing apparatus 1000 includes a processor 1010, a communication interface 1020, and a memory 1030. The processor 1010, the communication interface 1020, and the memory 1030 may be connected to each other through an internal bus 1040, or may communicate with each other through another means such as wireless transmission. In this embodiment of this application, a connection through the bus 1040 is used as an example. The bus 1040 may be a peripheral component interconnect (PCI) bus, an extended industry standard architecture (EISA) bus, or the like. The bus 1040 may be classified into an address bus, a data bus, a control bus, and the like. For ease of representation, only one thick line is for representing the bus in FIG. 10, but this does not mean that there is only one bus or only one type of bus.

The processor 1010 may include at least one general-purpose processor, for example, a central processing unit (CPU), or a combination of a CPU and a hardware chip. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof. The processor 1010 executes various types of digital storage instructions, for example, software or a firmware program stored in the memory 1030, so that the data processing apparatus 1000 can provide a plurality of services.

The memory 1030 is configured to store program code, and the processor 1010 controls execution of the program code, to perform the processing steps of the data processing method in the foregoing embodiments. The program code may include one or more software modules. The one or more software modules may be software modules provided in FIG. 8, for example, an obtaining unit or a sending unit. The obtaining unit is configured to obtain a first packet flow description PFD, where the first PFD includes a first triplet and a first application ID; and is further configured to obtain a second PFD sent by a second device, where the second PFD includes a second triplet and a second application ID. The sending unit is configured to send a PFD set to a UDR based on the first PFD and the second PFD, where the PFD set includes at least one of the first PFD or the second PFD.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a softwarestimulated complete computer system that has a function of a complete hardware system and that runs in a fully isolated environment. This is not specifically limited in this application.

The memory 1030 may include a volatile memory, for example, a random access memory (RAM). The memory 1030 may also include a non-volatile memory, for example, a read-only memory (ROM), a flash memory, a hard disk drive (HDD), or a solid state disk (SSD). The memory 1030 may further include a combination of the foregoing types. The memory 1030 may store program code, and perform step 201 to step 204 and optional steps thereof in FIG. 2, step 301 to step 304 and optional steps thereof in FIG. 3, step 402, step 404 to step 406, and optional steps thereof in FIG. 4, or step 701, step 706, step 707, and optional steps thereof in FIG. 7. Details are not described herein again.

The communication interface 1020 may be a wired interface (for example, an Ethernet interface), an internal interface (for example, a high-speed serial computer extended bus standard (PCIe) bus interface), a wired interface (for example, an Ethernet interface), or a wireless interface (for example, a cellular network interface or a wireless local area network interface), and is configured to communicate with another device or module.

It should be noted that FIG. 10 is merely a possible implementation of this embodiment of this application. During actual application, the data processing apparatus 1000 may further include more or fewer components. This is not limited herein. For content that is not shown or not described in this embodiment of this application, refer to related descriptions in FIG. 2, FIG. 3, FIG. 4, or FIG. 7. Details are not described herein again.

It should be understood that the computing device shown in FIG. 10 may alternatively be a computer cluster including at least one server. This is not specifically limited in this application.

Refer to FIG. 11. FIG. 11 is a diagram of another structure of a data processing apparatus according to an embodiment of this application. The data processing apparatus 1100 includes a processor 1110, a communication interface 1120, and a memory 1130. The processor 1110, the communication interface 1120, and the memory 1130 may be connected to each other through an internal bus 1140, or may communicate with each other through another means such as wireless transmission. In this embodiment of this application, a connection through the bus 1140 is used as an example. The bus 1140 may be a peripheral component interconnect (PCI) bus, an extended industry standard architecture (EISA) bus, or the like. The bus 1140 may be classified into an address bus, a data bus, a control bus, and the like. For ease of representation, only one thick line is for representing the bus in FIG. 11, but this does not mean that there is only one bus or only one type of bus.

The processor 1110 may include at least one general-purpose processor, for example, a central processing unit (CPU), or a combination of a CPU and a hardware chip. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof. The processor 1110 executes various types of digital storage instructions, for example, software or a firmware program stored in the memory 1130, so that the data processing apparatus 1100 can provide a plurality of services.

The memory 1130 is configured to store program code, and the processor 1110 controls execution of the program code, to perform the processing steps of the data processing method in the foregoing embodiments. The program code may include one or more software modules. The one or more software modules may be software module provided in FIG. 9, for example, an obtaining unit or a sending unit. The obtaining unit is configured to obtain a PFD information query request sent by a first device; and is further configured to obtain a PFD set sent by the first device, where the PFD set includes at least one of a first PFD and a second PFD, and the first PFD includes a first triplet and a first application ID. The sending unit is configured to send the second PFD to the first device, where the second PFD includes a second triplet and a second application ID.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a softwarestimulated complete computer system that has a function of a complete hardware system and that runs in a fully isolated environment. This is not specifically limited in this application.

The memory 1130 may include a volatile memory, for example, a random access memory (RAM). The memory 1130 may also include a non-volatile memory, for example, a read-only memory (ROM), a flash memory, a hard disk drive (HDD), or a solid state disk (SSD). The memory 1130 may further include a combination of the foregoing types. The memory 1130 may store program code, and perform step 205 and an optional step thereof in FIG. 2, step 305 and an optional step thereof in FIG. 3, step 403 and an optional step thereof in FIG. 4, or step 703 and an optional step thereof in FIG. 7. Details are not described herein again.

The communication interface 1120 may be a wired interface (for example, an Ethernet interface), an internal interface (for example, a high-speed serial computer extended bus standard (PCIe) bus interface), a wired interface (for example, an Ethernet interface), or a wireless interface (for example, a cellular network interface or a wireless local area network interface), and is configured to communicate with another device or module.

It should be noted that FIG. 11 is merely a possible implementation of this embodiment of this application. During actual application, the computing device 1100 may further include more or fewer components. This is not limited herein. For content that is not shown or not described in this embodiment of this application, refer to related descriptions in FIG. 2, FIG. 3, FIG. 4, or FIG. 7. Details are not described herein again.

It should be understood that the computing device shown in FIG. 11 may alternatively be a computer cluster including at least one server. This is not specifically limited in this application.

An embodiment of this application further provides a computer-readable storage medium. The computer-readable storage medium stores instructions. When the instructions are run on a processor, a procedure performed by the NEF or the AF in the method shown in FIG. 2 or FIG. 3 is implemented.

An embodiment of this application further provides a computer-readable storage medium. The computer-readable storage medium stores instructions. When the instructions are run on a processor, a procedure performed by the NEF or the NWDAF in the method shown in FIG. 4 or FIG. 7 is implemented.

An embodiment of this application further provides a computer-readable storage medium. The computer-readable storage medium stores instructions. When the instructions are run on a processor, a procedure performed by the UDR in the method shown in FIG. 2 or FIG. 3 is implemented.

An embodiment of this application further provides a computer-readable storage medium. The computer-readable storage medium stores instructions. When the instructions are run on a processor, a procedure performed by the UDR in the method shown in FIG. 4 or FIG. 7 is implemented.

An embodiment of this application further provides a computer program product. When the computer program product is run on a processor, a procedure performed by the NEF or the AF in the method shown in FIG. 2 or FIG. 3 is implemented.

An embodiment of this application further provides a computer program product. When the computer program product is run on a processor, a procedure performed by the NEF or the NWDAF in the method shown in FIG. 4 or FIG. 7 is implemented.

An embodiment of this application further provides a computer program product. When the computer program product is run on a processor, a procedure performed by the UDR in the method shown in FIG. 2 or FIG. 3 is implemented.

An embodiment of this application further provides a computer program product. When the computer program product is run on a processor, a procedure performed by the UDR in the method shown in FIG. 4 or FIG. 7 is implemented.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division of the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one location, or may be distributed on a plurality of network units. Some or all of the units may be selected according to actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of software function unit.

When the integrated unit is implemented in the form of software function unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A data processing method, comprising:
obtaining, by a first device, a first packet flow description PFD, wherein the first PFD comprises a first triplet and a first application identity ID;
obtaining, by the first device, a second PFD sent by a second device, wherein the second PFD comprises a second triplet and a second application ID; and
sending, by the first device, a PFD set to a unified data repository UDR based on the first PFD and the second PFD, wherein the PFD set comprises at least one of the first PFD or the second PFD.

2. The method according to claim 1, wherein the first PFD further comprises a first character string, the second PFD further comprises a second character string, the first character string is used to describe a source of the first PFD, and the second character string is used to describe a source of the second PFD.

3. The method according to claim 2, wherein sending, by the first device, the PFD set to the UDR based on the first PFD and the second PFD, wherein the PFD set comprises at least one of the first PFD or the second PFD comprises:
when the first device determines that the first triplet is different from the second triplet and the first application ID is different from the second application ID, sending, by the first device, the PFD set to the UDR, wherein the PFD set comprises the first PFD and the second PFD; or
when the first device determines that the first triplet is different from the second triplet and the first application ID is the same as the second application ID, or the first triplet is the same as the second triplet and the first application ID is different from the second application ID, determining, by the first device, that the first character string is different from the second character string, and determining, by the first device, that the first character string indicates that the source of the first PFD is an application function AF, and sending the PFD set to the UDR, wherein the PFD set comprises the first PFD; or determining, by the first device, that the first character string indicates that the source of the first PFD is a network data analytics function NWDAF, and sending the PFD set to the UDR, wherein the PFD set comprises the second PFD.

4. The method according to claim 2, wherein the first PFD further comprises first time information, and the second PFD further comprises second time information; and
sending, by the first device, the PFD set to the UDR based on the first PFD and the second PFD, wherein the PFD set comprises at least one of the first PFD or the second PFD comprises:
when the first device determines that the first triplet is different from the second triplet and the first application ID is the same as the second application ID, or the first triplet is the same as the second triplet and the first application ID is different from the second application ID, determining, by the first device, that the first character string is the same as the second character string, and determining, by the first device based on the first time information and the second time information, that the first PFD is generated before the second PFD, and sending the PFD set to the UDR, wherein the PFD set comprises the second PFD; or determining, by the first device based on the first time information and the second time information, that the first PFD is generated after the second PFD, and sending the PFD set to the UDR, wherein the PFD set comprises the first PFD; or
when the first device determines that the first triplet is the same as the second triplet and the first application ID is the same as the second application ID, determining, by the first device based on the first time information and the second time information, that the first PFD expires before the second PFD, and sending the PFD set to the UDR, wherein the PFD set comprises the second PFD; or determining, by the first device based on the first time information and the second time information, that the first PFD expires after the second PFD, and sending the PFD set to the UDR, wherein the PFD set comprises the first PFD.

5. The method according to claim 4, wherein the first time information comprises an expiration moment of the first PFD and a generation moment of the first PFD, or validity duration of the first PFD and a generation moment of the first PFD, and the second time information comprises an expiration moment of the second PFD and a generation moment of the second PFD, or validity duration of the second PFD and a generation moment of the second PFD.

6. The method according to claim 2, wherein a generation moment of the first PFD is after a generation moment of the second PFD; and
sending, by the first device, the PFD set to the UDR based on the first PFD and the second PFD, wherein the PFD set comprises at least one of the first PFD or the second PFD comprises:
sending, by the first device, the PFD set to the UDR when the first application ID is the same as the second application ID, at least one of the following cases occurs: the first triplet is different from the second triplet, the first URL is different from the second URL, and the first domain name DN is different from the second DN, the first character string indicates that the source of the first PFD is an NWDAF, and the second character string indicates that the source of the second PFD is an AF, wherein the PFD set comprises the first PFD and the second PFD; or
sending, by the first device, the PFD set to the UDR when the first application ID is the same as the second application ID, at least one of the following cases occurs: the first triplet is different from the second triplet, the first URL is different from the second URL, and the first DN is different from the second DN, the first character string indicates that the source of the first PFD is an NWDAF, and the second character string indicates that the source of the second PFD is an NWDAF, wherein the PFD set comprises the first PFD.

7. The method according to claim 2, wherein a generation moment of the first PFD is after a generation moment of the second PFD; and
sending, by the first device, the PFD set to the UDR based on the first PFD and the second PFD, wherein the PFD set comprises at least one of the first PFD or the second PFD comprises:
sending, by the first device, the PFD set to the UDR when the first application ID is different from the second application ID, the first triplet is the same as the second triplet, the first character string indicates that the source of the first PFD is an NWDAF, and the second character string indicates that the source of the second PFD is an NWDAF, wherein the PFD set comprises the first PFD; or
sending, by the first device, the PFD set to the UDR when the first application ID is different from the second application ID, the first triplet is the same as the second triplet, the first character string indicates that the source of the first PFD is an NWDAF, and the second character string indicates that the source of the second PFD is an AF, wherein the PFD set comprises the second PFD.

8. The method according to claim 1, wherein the second PFD further comprises a third character string, and the third character string indicates that the PFD is a PFD generated by a preset device.

9. The method according to any one of claims 1 to 5, wherein the first device comprises a network exposure function NEF and the second device comprises a UDR; or the first device comprises an AF and the second device comprises an NWDAF.

10. The method according to any one of claims 6 to 8, wherein when the first device comprises an NWDAF, the second device comprises a UDR or a NEF, and the first PFD is a PFD generated by the NWDAF; or when the first device comprises a NEF, the second device comprises a UDR.

11. A data processing method, comprising:
obtaining, by a unified data repository UDR, a PFD information query request from a first device;
sending, by the UDR, a second PFD to the first device, wherein the second PFD comprises a second triplet and a second application identity ID; and
obtaining, by the UDR, the PFD set from the first device, wherein the PFD set comprises at least one of a first PFD and the second PFD, and the first PFD comprises a first triplet and a first application ID.

12. The method according to claim 11, wherein the second PFD further comprises a second character string, the first PFD further comprises a first character string, the first character string is used to describe a source of the first PFD, and the second character string is used to describe a source of the second PFD.

13. The method according to claim 11 or 12, wherein the first PFD further comprises first time information, and the second PFD further comprises second time information.

14. The method according to claim 11, wherein the second PFD further comprises a third character string, and the third character string indicates that the PFD is a PFD generated by a preset device.

15. A data processing apparatus, comprising:
an obtaining unit, configured to obtain a first packet flow description PFD, wherein the first PFD comprises a first triplet and a first application ID; and
the obtaining unit is further configured to obtain a second PFD sent by a second device, wherein the second PFD comprises a second triplet and a second application ID; and
a sending unit, configured to send a PFD set to the UDR based on the first PFD and the second PFD, wherein the PFD set comprises at least one of the first PFD or the second PFD.

16. The apparatus according to claim 15, wherein the first PFD further comprises a first character string, the second PFD further comprises a second character string, the first character string is used to describe a source of the first PFD, and the second character string is used to describe a source of the second PFD.

17. The apparatus according to claim 16, wherein the sending unit is specifically configured to:
when determining that the first triplet is different from the second triplet and the first application ID is different from the second application ID, send, by the first device, the PFD set to the UDR, wherein the PFD set comprises the first PFD and the second PFD; or
when determining that the first triplet is different from the second triplet and the first application ID is the same as the second application ID, or the first triplet is the same as the second triplet and the first application ID is different from the second application ID, determine, by the first device, that the first character string is different from the second character string, and determine, by the first device, that the first character string indicates that the source of the first PFD is an AF, and send the PFD set to the UDR, wherein the PFD set comprises the first PFD; or determine, by the first device, that the first character string indicates that the source of the first PFD is an NWDAF, and send the PFD set to the UDR, wherein the PFD set comprises the second PFD.

18. The apparatus according to claim 16, wherein the first PFD further comprises first time information, and the second PFD further comprises second time information; and
the sending unit is specifically configured to:
when determining that the first triplet is different from the second triplet and the first application ID is the same as the second application ID, or the first triplet is the same as the second triplet and the first application ID is different from the second application ID, determine, by the first device, that the first character string is the same as the second character string, and determine, by the first device based on the first time information and the second time information, that the first PFD is generated before the second PFD, and send the PFD set to the UDR, wherein the PFD set comprises the second PFD; or determine, by the first device based on the first time information and the second time information, that the first PFD is generated after the second PFD, and send the PFD set to the UDR, wherein the PFD set comprises the first PFD; or
when determining that the first triplet is the same as the second triplet and the first application ID is the same as the second application ID, determine, by the first device based on the first time information and the second time information, that the first PFD expires before the second PFD, and send the PFD set to the UDR, wherein the PFD set comprises the second PFD; or determine, by the first device based on the first time information and the second time information, that the first PFD expires after the second PFD, and send the PFD set to the UDR, wherein the PFD set comprises the first PFD.

19. The apparatus according to claim 18, wherein the first time information comprises an expiration moment of the first PFD and a generation moment of the first PFD, or validity duration of the first PFD and a generation moment of the first PFD, and the second time information comprises an expiration moment of the second PFD and a generation moment of the second PFD, or validity duration of the second PFD and a generation moment of the second PFD.

20. The apparatus according to claim 16, wherein a generation moment of the first PFD is after a generation moment of the second PFD; and
the sending unit is specifically configured to:
send, by the first device, the PFD set to the UDR when the first application ID is the same as the second application ID, at least one of the following cases occurs: the first triplet is different from the second triplet, the first URL is different from the second URL, and the first DN is different from the second DN, the first character string indicates that the source of the first PFD is an NWDAF, and the second character string indicates that the source of the second PFD is generated by an AF, wherein the PFD set comprises the first PFD and the second PFD; or
send, by the first device, the PFD set to the UDR when the first application ID is the same as the second application ID, at least one of the following cases occurs: the first triplet is different from the second triplet, the first URL is different from the second URL, and the first DN is different from the second DN, the first character string indicates that the source of the first PFD is an NWDAF, and the second character string indicates that the source of the second PFD is an NWDAF, wherein the PFD set comprises the first PFD.

21. The apparatus according to claim 16, wherein a generation moment of the first PFD is after a generation moment of the second PFD; and
the sending unit is specifically configured to:
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an NWDAF, wherein the PFD set comprises the first PFD; or
send, by the first device, the PFD set to the UDR when the first application ID is different from the second application ID, the first triplet is the same as the second triplet, the first character string indicates that the source of the first PFD is an NWDAF, and the second character string indicates that the source of the second PFD is an AF, wherein the PFD set comprises the second PFD.

22. The apparatus according to claim 15, wherein the second PFD further comprises a third character string, and the third character string indicates that the PFD is a PFD generated by a preset device.

23. The apparatus of any one of claims 15 to 19, wherein the first device comprises a network exposure function NEF and the second device comprises a unified data repository UDR, or the first device comprises an application function AF and the second device comprises an NWDAF.

24. The apparatus according to any one of claims 20 to 22, wherein when the first device comprises an NWDAF, the second device comprises a UDR or a NEF, and the first PFD is a PFD generated by the NWDAF; or when the first device comprises a NEF, the second device comprises a UDR.

25. A data processing apparatus, comprising:
an obtaining unit, configured to obtain a PFD information query request sent by a first device; and
a sending unit, configured to send a second PFD to the first device, wherein the second PFD comprises a second triplet and a second application identity ID; and
the obtaining unit is further configured to obtain a PFD set sent by the first device, wherein the PFD set comprises at least one of a first PFD and the second PFD, and the first PFD comprises a first triplet and a first application ID.

26. The apparatus according to claim 25, wherein the second PFD further comprises a second character string, the first PFD further comprises a first character string, the first character string is used to describe a source of the first PFD, and the second character string is used to describe a source of the second PFD.

27. The apparatus according to claim 25 or 26, wherein the first PFD further comprises first time information, and the second PFD further comprises second time information.

28. The apparatus according to claim 25, wherein the second PFD further comprises a third character string, and the third character string indicates that the PFD is a PFD generated by a preset device.

29. A data processing apparatus, comprising a processor and a memory, wherein the memory is configured to store instructions, the processor is configured to execute the instructions, and when the processor executes the instructions, the method according to any one of claims 1 to 6 is performed.

30. A data processing apparatus, comprising a processor and a memory, wherein the memory is configured to store instructions, the processor is configured to execute the instructions, and when the processor executes the instructions, the method according to any one of claims 7 to 9 is performed.

31. A computer-readable storage medium, comprising a program, wherein when the program is run on a computer, the computer is enabled to perform the method according to any one of claims 1 to 10.

32. A computer-readable storage medium, comprising a program, wherein when the program is run on a computer, the computer is enabled to perform the method according to any one of claims 11 to 14.

33. A computer program product comprising instructions, wherein when the computer program product is run on a computer, the computer is enabled to perform the method according to any one of claims 1 to 10.

34. A computer program product comprising instructions, wherein when the computer program product is run on a computer, the computer is enabled to perform the method according to any one of claims 11 to 14.
